# EUROPEAN PATENT APPLICATION

(11) **EP 1 796 031 A1**
(43) Date of publication of application: **13.06.2007**
(21) Application number: 05787680.7
(22) Date of filing: 30.09.2005
(51) Int. Cl.: G06Q 50/00, G05B 19/418

(54) **ENVIRONMENT LOAD TOTALIZING DEVICE AND METHOD**

(30) Priority: 30.09.2004 JP 2004286616; 08.09.2005 JP 2005260462
(71) Applicant: HITACHI, LTD., Chiyoda-ku Tokyo 100-8280 (JP)
(72) Inventor: SASAKI, Tomoyo, Industrial Info. Systems Div., Tokyo 140-8573 (JP); ICHIKAWA, Yoshiaki, Industrial Info. Systems Div., Tokyo 140-8573 (JP); KOBAYASHI, Shiro, Industrial Info. Systems Div., Tokyo 140-8573 (JP)
(74) Representative: Strehl Schübel-Hopf & Partner
(86) International application number: PCT/JP2005/018079
(87) International publication number: WO 2006/035924

(57) **Abstract**

It is made unnecessary for a supplier to record data on input and discharge at the life stages for each manufacturer even if the definitions of the product life stages are different in manufacturers. A storage unit (20) holds component information, step information, and information (stage definition information) on the basic steps assigned to the life stages of a product. The step information includes information on environment load items, information on the basic step corresponding to the objective step, and information on components associated with the objective step. The basic step relates to the manufacture of a product defined according to a predetermined rule and is definition information common to user. A computing unit (10) specifies each component constituting a specific product by using the component information on the components, searches for the step information associated with the specified components, classifies the found step information by using the stage definition information by life stage, and totalizes the information on the environment load items included in the step information for each life stage.

## Description

### Technical Field

The present invention relates to a technique of aggregating environmental impact information in life stages of a product, and particularly to a technique for aiding in preparation of an "ecological profile" defined in the EuP directive.

### Background Art

Among EU regulations concerning automobiles is an ELV (End-of-Life Vehicles) regulation. As a general rule, ELV prohibits use of lead, mercury, hexavalent chromium and cadmium in parts of an automobile. Generally, the number of parts of an automobile is in the tens of thousands. Furthermore, automobile manufacturers are provided with parts by many suppliers. Accordingly, it is not easy for an automobile manufacturer to examine whether a prohibited material is used or not for each part in an automobile. As a result of this, IMDS (International Material System) is used. IMDS is a database system provided on a network such as the Internet. A parts supplier can register materials of component parts of a product (an automobile part) and material data into the IMDS through a network. An automobile maker can browse contents registered in the IMDS to check parts used in his product (Non-Patent Document 1).

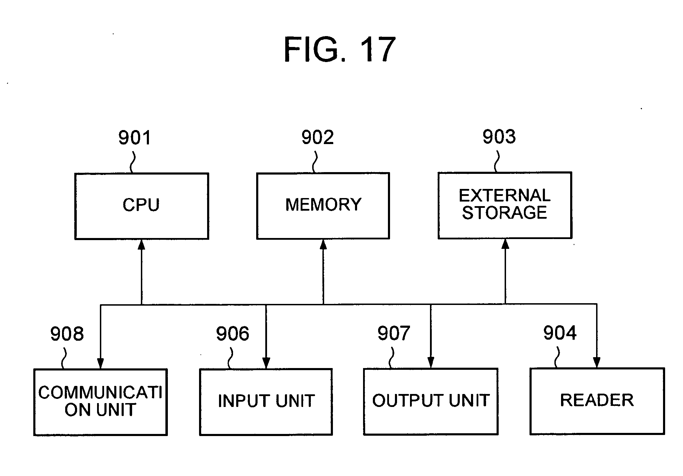

Non-Patent Document 1: ICHIKAWA, Yoshiaki, "Environmental Management Strategy for Changing New Regulations into Business Opportunity", Chuo-Hoki Shuppan, July, 10, 2004, p. 51, Fig. 17

### Disclosure of the Invention

### Problems to be Solved by the Invention

Recently, EU has proposed EuP (Proposal for a DIRECTIVE on establishing a framework for the setting of Eco-design for Energy Using Products). The conventional life cycle evaluation ends in closed data collection in which all the stages of a life cycle are investigated or estimated within a company that collects the data. However, in a modern highly-specialized society in which parts are procured globally, it becomes necessary to collect data, giving consideration to a supply chain. In other words, it can be said that a life stage in the real world is a supply chain itself, and a new problem emerges of collecting data of the life stage in the supply chain. Accordingly, EuP makes it compulsory to prepare an "ecological profile" that quantitatively evaluates inputs and discharges in each life stage of a life cycle, in performing environmental design of a product.

To make the above-mentioned IDMS applicable to the EuP, consideration is given to changing IDMS so as to register not only materials of component parts of a product and material data but also data of inputs and discharges in production (assembly) processes of the component parts. However, although EuP defines life cycles of an energy-using product, Eup does not define each component life stage of a life cycle. It is considered that definitions of life stages are different between makers. Accordingly, collection ranges for input and discharge data for each life stage are different between makers, so that a supplier must register different data to the IMDS for each maker.

Further, even if cost information of a component part cannot be estimated from aggregated data of inputs and discharges in each life stage of an end product, sometimes cost information of a component part can be estimated from data of inputs and discharges in a manufacturing process of the component part itself. Thus, it is required to provide a system in which data of inputs and discharges in a production process of a component part produced by a supplier cannot be seen without permission of the supplier.

The present invention has been made taking the above situations into consideration. An object of the present invention is to provide a technique for making it unnecessary for a supplier to register input/discharge data in each life stage in advance for each maker even if definitions of each life stage of a product are different between makers.

Further, another object of the present invention is to provide a technique for making data, which a supplier does not want to disclose, secret even to a maker to which a part manufactured by the supplier is supplied.

### Means to Solve the Problems

To solve the above problems, according to a first aspect of the present invention, a user can originally define each life stage of a life cycle defined by a lawregulation such as EuP, using basic processes common to users. At the same time, processes employed originally by a user are managed in association with the basic processes.

For example, the first aspect of the present invention provides an environmental load aggregation apparatus for aggregating environmental load information in life stages of a product, wherein:
said environmental load aggregation apparatus comprises:
   a part information storage device, which stores part information on each part or the product, said part information including information on other parts having a parent-child relationship to the part;
   a process information storage device, which stores process information on a process relating to production of a part or the product, said process information being defined by a supplier of the part or the product in question and comprising information on environmental load items affecting environment in said process, information on a basic process corresponding to said process among basic processes that are defined by a predetermined rule and that relate to the production of the product, and information on a part to which said process is tied;
   a stage definition information storage device, which stores stage definition information on a life stage of the product, the stage definition information being defined by the supplier of the product and comprising information on a basic process assigned to said life stage; and
   an environmental load information aggregation device, which receives designation of the product and aggregates environmental load information in life stages of the designated product; and
   said environmental load information aggregation device performs: processing for specifying each component part of the designated product, using the part information of each part, which is stored in said part information storage device; processing for searching the process information storage device for process information on a process tied to each of the specified parts; processing for classifying the retrieved pieces of process information according to life stage to which a basic process included in each piece of process information is assigned, using the stage definition information of the supplier of the designated product, which is stored in said stage definition information storage device; and processing for aggregating the environmental load information included in the retrieved pieces of process information, for each life stage.

Further, in a second aspect of the present invention, a user can set a disclosure level of information on environmental load items, for each process defined originally by the user.

For example, the second aspect of the present invention provides an environmental load aggregation apparatus that is the environmental load aggregation apparatus of the first mode, wherein:
the environmental load aggregation apparatus further comprises:
   a part configuration information display device, which receives designation of the product, and displays the part information of each component part of the designated product, which is stored in said part information storage device, and the process information of a process tied to any component part of said designated product, which is stored in said process information storage device;
   each piece of process information stored in said process information storage device has a disclosure level indicating whether information on environmental load items should be disclosed or not; and
   when said part configuration information display device displays the process information of a process tied to a component part of said designated product, the part configuration information display device displays the information on the environmental load items included in said process information as it is when the disclosure level included in said process information permits disclosure of the information on the environmental load items, and displays a life cycle assessment value calculated from the information on the environmental load items, which is included in said process information when said disclosure level does not permit the disclosure.

Further, in a third aspect of the present invention, a user can originally define each life stage of a life cycle defined by a law/regulation such as EuP, using basic processes common to users.

For example, the third aspect of the present invention provides an environmental load aggregation apparatus for aggregating environmental load information in life stages of a product, wherein:
said environmental load aggregation apparatus comprises:
   a part information storage device, which stores part information on each part or the product, said part information including information on other parts having parent-child relationship to the part or the product in question;
   a process information storage device, which stores process information comprising information on a basic process relating to production of a product, which is defined by a predetermined rule, and information on a part to which said process information is tied;
   an environmental load information storage device, which stores environmental load information comprising information on a basic process and information environmental load items affecting environment in said basic process;
   a life stage definition information storage device, which stores stage definition information comprising information on basic processes assigned to each life stage of the product; and
   an environmental load information aggregation device, which receives designation of the product and aggregates environmental load information in life stages of the designated product; and
   said environmental load information aggregation device performs: processing for specifying each component part of the designated product, using the part information of each part, which is stored in said part information storage device; processing for searching the process information storage device for process information on a process tied to each of the specified parts; processing for classifying the retrieved pieces of process information according to life stage to which a basic process included in each piece of process information is assigned, using the stage definition information of the designated product, which is stored in said stage definition information storage device; and processing for reading environmental load information including information on a basic process included in each of the retrieved pieces of process information, from said environmental load information storage device, and aggregating the environmental load information included in the read pieces of process information, for each life stage.

### Effects of the Invention

According to the present invention, even if definitions of life stages of products are different between makers, it is not necessary for a supplier to register input/discharge data in each life stage for each maker. Further, it is possible to make data, which a supplier does not want to disclose, secret even to a maker to which a part manufactured by the supplier is supplied.

### Brief Description of Drawings

Fig. 1 is a schematic diagram showing an environmental load evaluation support apparatus of a first embodiment of the present invention;
Fig. 2(A) and 2(B) are diagrams showing, respectively, a company number management table 2011 and a supply relation management table 2012;
Fig. 3(A) and 3(B) are diagrams showing, respectively, a basic process information management table 2021 and a tree diagram expressing parent-child relationships between basic processes, which can be grasped from the basic process information management table 2021;
Figs. 4(A) and 4(B) are diagrams showing, respectively, a part number management table 2031 and a part configuration management table 2032;
Fig. 5(A) and 5(B) are diagrams showing, respectively, a process number management table 2041 and a process tying management table 2042;
Fig. 6(A) and 6(B) are diagrams showing, respectively, an environmental load item management table 2051 and an environmental load management table 2052;
Fig. 7 is a diagram showing a law-wise environmental load management table 2061;
Fig. 8(A) and 8(B) are diagrams showing, respectively, a stage number management table 2071 and a stage definition information management table 2072;
Fig. 9 is a flowchart for explaining life stage definition information registration processing by a life stage definition information registration processing unit 105;
Fig. 10 is a flowchart for explaining part configuration tree display processing by a configuration tree display processing unit 101;
Fig. 11 is a view showing an example of a various settings reception screen displayed on an input-output unit 30 when an end product maker A selects a fully automatic washing machine (AA-8S-C001) in a first embodiment of the present invention;
Fig. 12 is a flowchart for explaining part information registration processing by a part information registration processing unit 102;
Fig. 13 is a flowchart for explaining process information registration processing by a process information registration processing unit 103;
Fig. 14 is a view showing an example of a process information reception screen in the first embodiment of the present invention;
Fig. 15 is a view showing an example of an environmental load item reception screen in the first embodiment of the present invention;
Fig. 16 is a flowchart for explaining environmental load display-aggregation processing by an environmental load calculation unit 104;
Fig. 17 is a diagram showing an example of a hardware configuration of the environmental load evaluation support apparatus 1;
Fig. 18(A) and 18(B) are diagrams showing, respectively, a process number management table 2041A and a process tying management table 2042A;
Fig. 19 is a diagram showing an environmental load management table 2052A;
Fig. 20 is a view showing an example of a various settings reception screen displayed on an input-output unit 30 when an end product maker A selects a fully automatic washing machine (AA-8S-C001) in a second embodiment of the present invention;
Fig. 21 is a view showing an example of a process information reception screen in the second embodiment of the present invention;
Fig. 22 is a view showing an example of an environmental load item reception screen in the second embodiment of the present invention;
Fig. 23 is a flowchart for explaining part environmental load information registration processing by a part information registration processing unit 102;
Fig. 24 is a view showing an example of a part designation screen in a third embodiment of the present invention; and
Fig. 25 is a view showing an example of an environmental load item reception screen in the third embodiment of the present invention.

### Best Mode for Carrying Out the invention

Now, embodiments of the present invention is described.

### [First Embodiment]

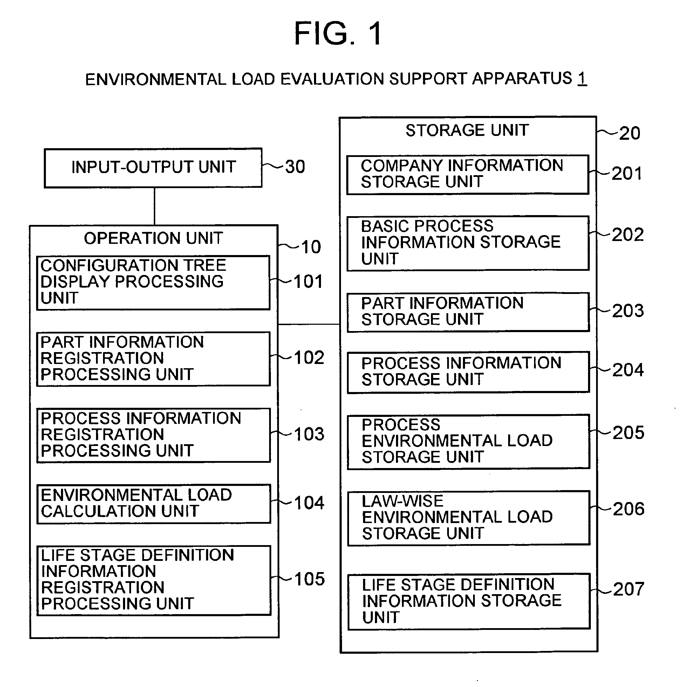

Fig. 1 is a schematic diagram showing an environmental load evaluation support apparatus to which a first embodiment of the present invention is applied. As shown in the figure, the environmental load evaluation support apparatus 1 of this embodiment comprises an operation unit 10, a storage unit 20 and an input-output unit 30.

The input-output unit 30 inputs and outputs data to be stored in and output from the storage unit 20, receives an instruction from a user, and displays information to the user.

The storage unit 20 comprises a company information storage unit 201, a basic process information storage unit 202, a part information storage unit 203, a process information storage unit 204, a process environmental load storage unit 205, a law-wise environmental load storage unit 206 and a life stage definition information storage unit 207.

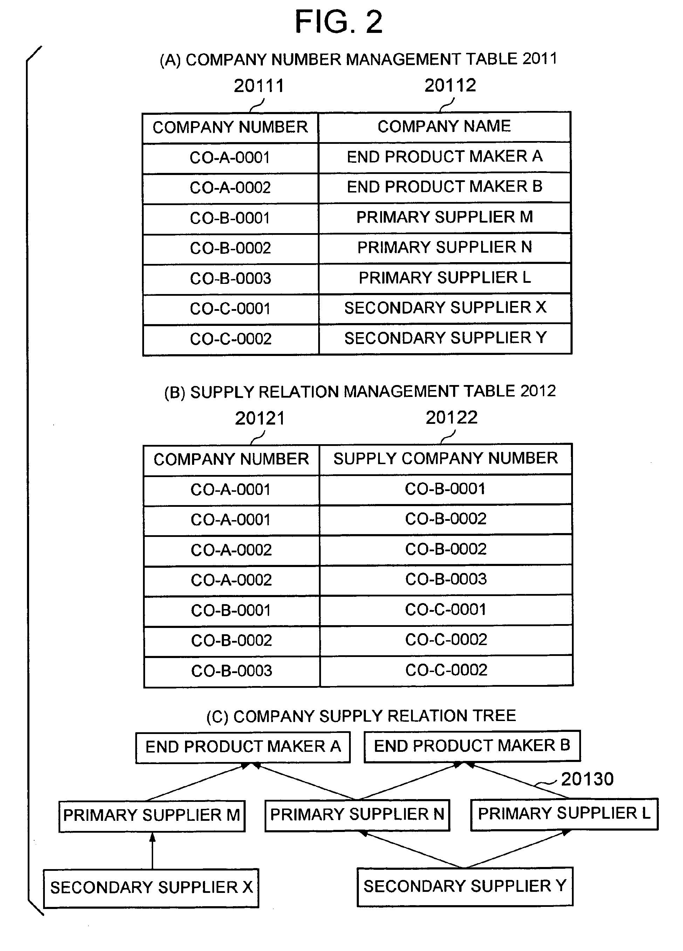

The company information storage unit 201 stores company information of each company that manufactures a product that is an object of evaluation. The company information storage unit 201 holds a company number management table 2011 shown in Fig. 2(A) and a supply relation management table 2012 shown in Fig. 2(B).

Each record of the company number management table 2011 has a field 20111 for registering a company number and a field 20112 for registering a company name.

Each record of the supply relation management table 2012 has a field 20121 for registering a company number of a company to which a part is supplied and a field 20122 for registering a company number of a supply company, i.e. a company that supplies the part in question.

Fig. 2(C) is a tree diagram expressing supply relationships between companies, which can be grasped from the company number management table 2011 and the supply relation management table 2012. In this figure, an arrow 20130 indicates movement of a part (i.e. relationship between a part supplier and a part recipient). For example, an end product maker A gets in parts from a primary supplier M and a primary supplier N. The primary supplier M gets in a part from a secondary supplier X, and the primary supplier N gets in a part from a secondary supplier Y.

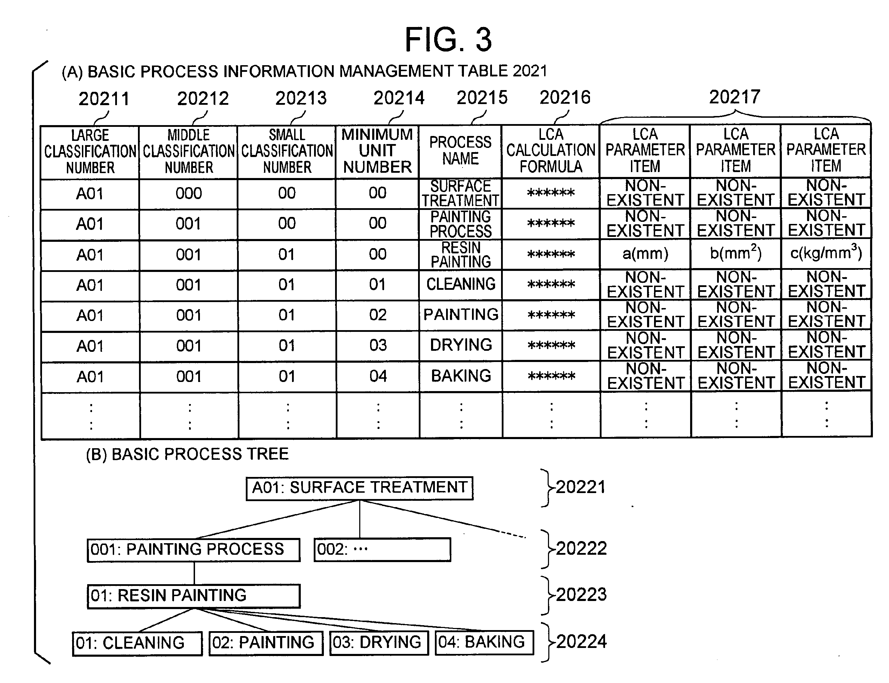

The basic process information storage unit 202 stores information on processes (referred to as basic processes) for manufacturing a product. The basic processes are defined (classified) according to prescribed rules. The basic process information storage unit 202 holds a basic process information management table 2021 shown in Fig. 3(A).

Each record of the basic process information management table 2021 has a field 20211 for registering a large classification number, a field 20212 for registering a middle classification number, a field 20213 for registering a small classification number, a field 20214 for registering a minimum unit number, a field 20215 for registering a process name, a field 20216 for registering an LCA calculation formula, and a plurality of fields 20217 for registering LCA parameter items.

Here, the LCA calculation formula is a formula for calculating an LCA value (Life Cycle Assessment value, i.e. environmental effect evaluation value) for the object process. For example, when an object process is iron cutting, then heavy oil input into the process in question and CO₂, NOₓ, SOₓ, scrap iron and the like discharged from the process in question, may be cited as items affecting the environment (i.e. environmental load items). An LCA value is a value that expresses effects of these environmental load items quantitatively. An LCA calculation formula defines kinds of input values (i.e., environmental load items) and a function used for calculating an LCA value from the input values. Further, LCA parameters are property values (coefficients and constants) used in calculation of an LCA value by means of an LCA calculation formula.

A process number of a basic process is expressed by its large classification number + its middle classification number + its small classification number + its minimum unit number. When the middle classification number and the more-detailed classification numbers are all 0, it means that the basic process in question is a process of a large classification. When the small classification number and the minimum unit number are all 0, it means that the basic process in question is a process of a middle classification. When the minimum unit number is 0, it means that the basic process in question is a process of a small classification. And, when the minimum unit number is assigned a figure other than 0, it means that the basic process in question is a process of a minimum unit. Fig. 3(B) is a tree diagram expressing parent-child relationships between the basic processes. These relationships can be grasped from the basic process information management table 2021. For example, "Surface treatment" of a large classification 20221, has a plurality of processes of middle classifications 20222, including "Painting process". Then, "Painting process" of a middle classification 20222 has "Resin painting" of a small classification 20223. Further, "Resin painting" of a small classification 20223 has "Cleaning", "Painting", "Drying" and "Baking" as processes of minimum units.

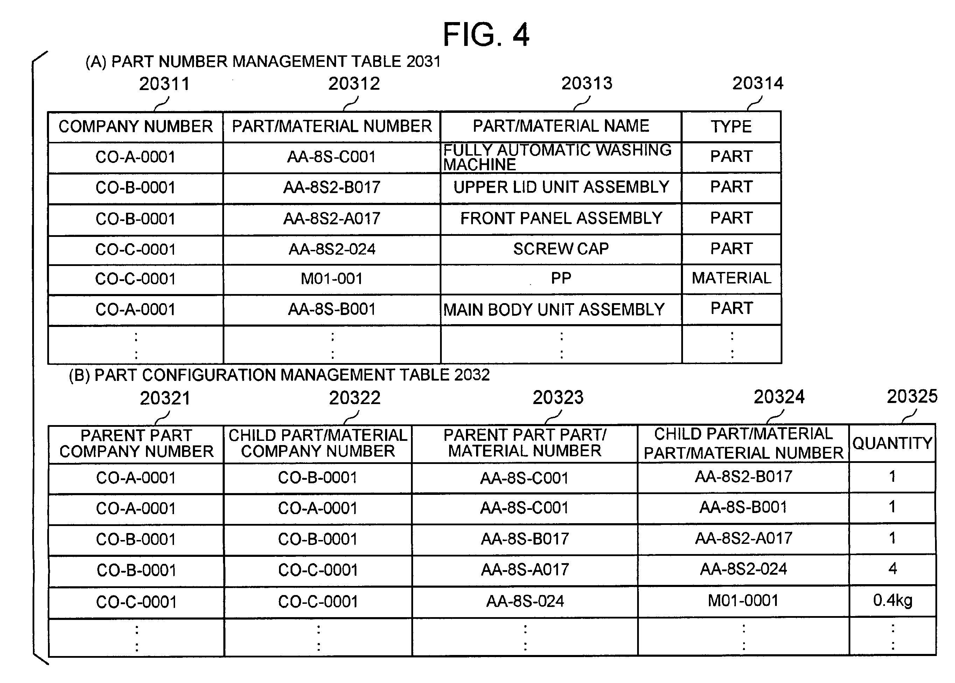

The part information storage unit 203 stores information on a product as an object of evaluation and information on each of the component parts (and materials) of the product. The part information storage unit 203 holds a part number management table 2031 shown in Fig. 4(A) and a part configuration management table 2032 shown in Fig. 4(B).

Each record of the part number management table 2031 has: a field 20311 for registering a company number of a company for which part information of the object part (or the product or the material) is registered; a field 20312 for registering a part/material number; a field 20313 for registering a name; and a field 20314 for registering a type distinguishing between part (including product) and material.

Each record of the part configuration management table 2032 has: a field 20321 for registering a company number that supplies a parent part, its part information being registered in the record in question; a field 20322 for registering a company number that supplies a child part or a material as a component of the parent part, information on the child part or the material being registered in the record in question; a field 20323 for registering a part/material number of the parent part; a field 20324 for registering a part/material number of the child part or the material; and a field 20325 for registering the quantity (number or weight) of the child part or the material.

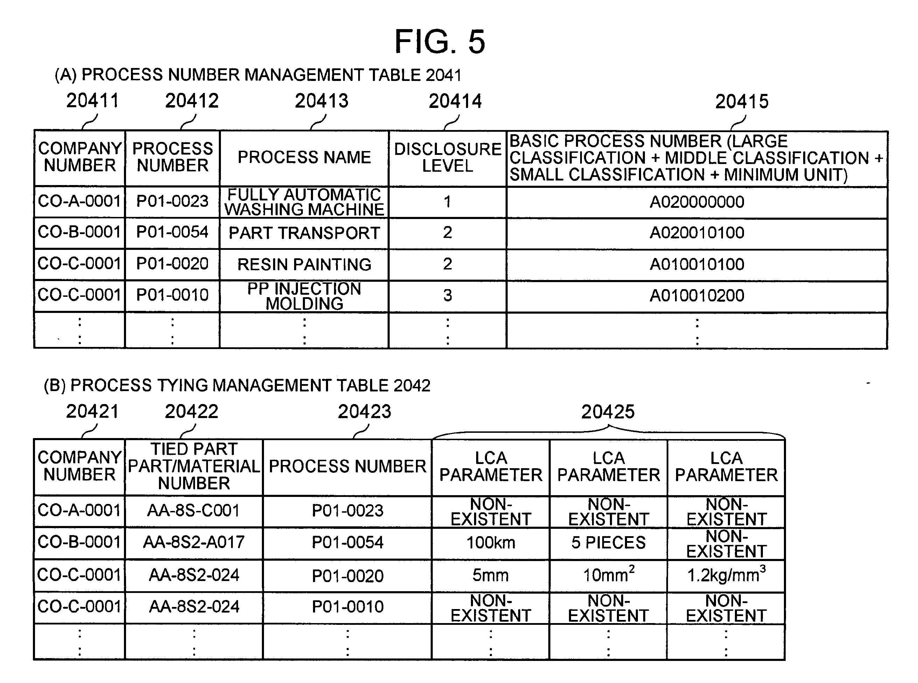

The process information storage unit 204 stores information of each of processes employed up to completion of an individual product as an object of evaluation. The process information storage unit 204 holds a process number management table shown in Fig. 5(A) and a process tying management table 2042 shown in Fig. 5(B).

Each record of the process number management table 2041 has: a field 20411 for registering a company number of a company for which the process information of the object process is registered; a field 20412 for registering a process number; a field 20413 for registering a name; a field 20414 for registering a disclosure level; and a field 20415 for registering a process number (i.e., a large classification number + a middle classification number + a small classification number + a minimum unit number) of the basic process corresponding to the object process. Here, the disclosure level is set for indicating the degree to which input of an intermediate product and produced quantity of waste and emission are to be disclosed to other people. In the present embodiment, the level "1" means that "process name" and "environmental load value" are disclosed, the level "2" means that "process name" and "LCA value" are disclosed, and the level "3" means that all is dosed.

Further, each record of the process tying management table 2042 has: a field 20421 for registering a company number of a company for which the process information of the object process is registered; a field 20422 for registering a part/material number of a part to which the object process is tied (i.e., a part produced by the object process); a field 20423 for registering a process number of the object process; and a plurality of fields 20425 for registering LCA parameters used for LCA calculation for the object process.

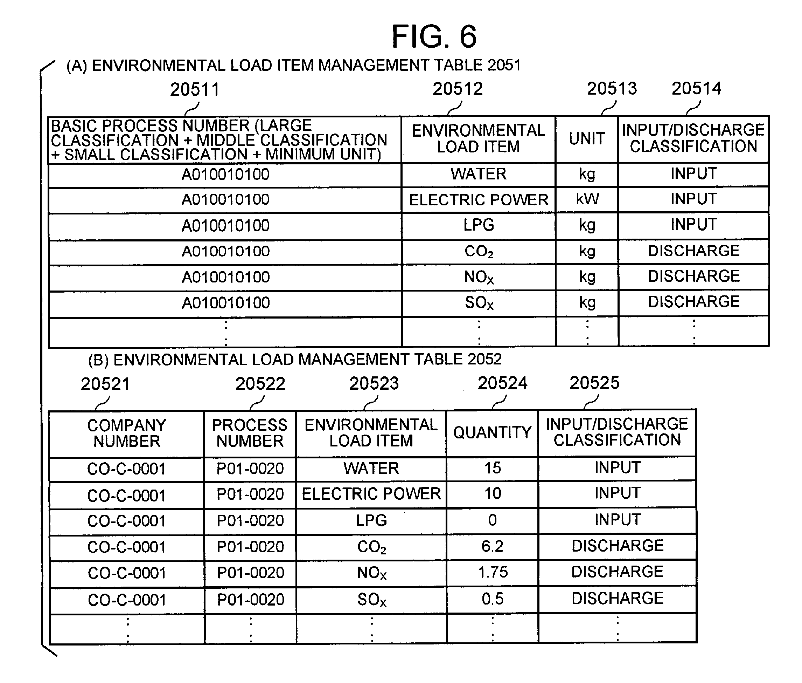

The process environmental load storage unit 205 registers environmental load information for each process. The process environmental load storage unit 205 holds an environmental load item management table 2051 shown in Fig. 6(A) and an environmental load management table 2052 shown in Fig. 6(B).

Each record of the environmental load item management table 2051 has: a field 20511 for registering a process number (a large classification number + a middle classification number + a small classification number + a minimum unit number) of a basic process; a field 20512 for registering an environmental load item that affects the environment in the object basic process; a field 20513 for registering a unit of the environmental load item; and a field 20514 for registering input/discharge classification information that indicates whether the environmental load item is input to the object basic process or discharged from the object basic process.

Further, each record of the environmental load management table 2052 has: a field 20521 for registering a company number of a company for which environmental load information of the object process is registered; a field 20522 for registering a process number of the object process; a field 20523 for registering an environmental load item that affects the environment in the object process; a field 20524 for registering a value (number or weight) of the environmental load item; and a field 20525 for registering input/discharge classification information that indicates whether the environmental load item is one input to the object process or one discharged from the object process.

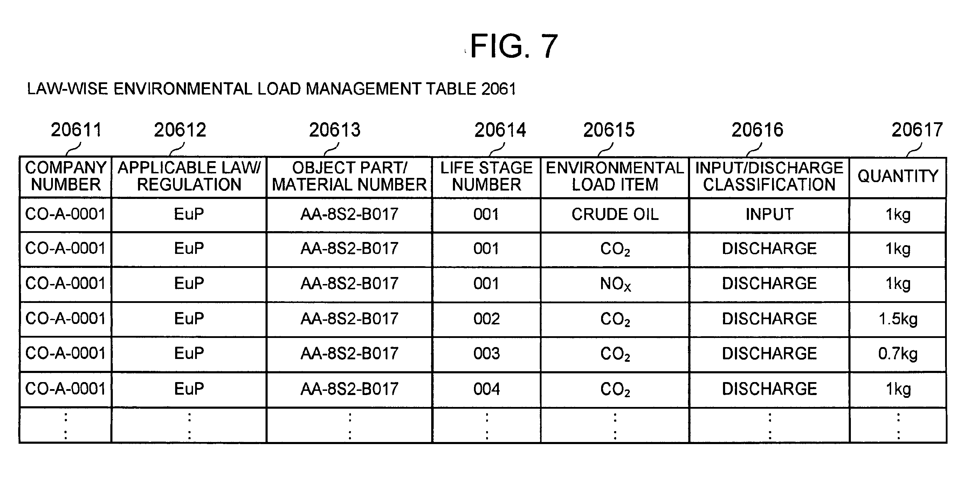

The law-wise environmental load storage unit 206 stores environmental load information in each life stage and for each law/regulation such as EuP. The law-wise environmental load storage unit 206 holds a law-wise environmental load management table 2061 shown in Fig. 7.

Each record of the law-wise environmental load management table 2061 has: a field 20611 for registering a company number of a company for which environmental load information of the object life stage is registered; a field 20612 for registering the object law/regulation; a field 20613 for registering a part/material number of a part to which the object life stage is tied; a field 20614 for registering a life stage number of the object life stage; a field 20615 for registering an environmental load item that becomes an input to the LCA calculation for the object life stage; a field 20616 for registering input/discharge classification information that indicates whether the environmental load item is input to the object life stage or discharged from the object life stage; and a field 20617 for registering a value (number or weight) of the environmental load item.

Here, the life stage is a component process of a life cycle defined by the object law/regulation. For example, EuP defines a life cycle but does not define each component life stage of the life cycle. Thus, each company (user) should define by itself which basic process is assigned to a life stage.

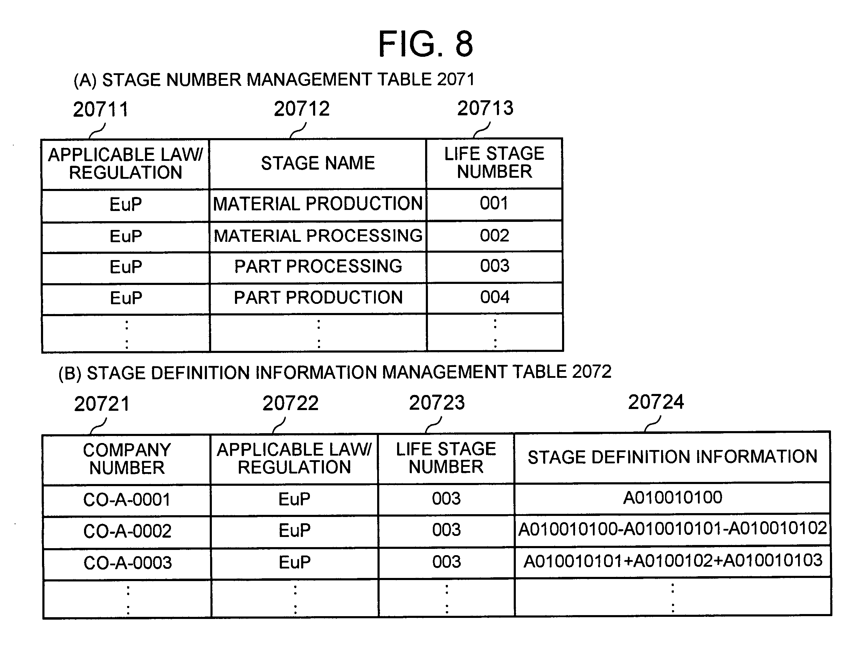

The life stage definition information storage unit 207 registers definition information of each life stage as a component of a life cycle defined by EuP or the like. The life stage definition information storage unit 207 holds a stage number management table 2071 shown in Fig. 8(A) and a stage definition information management table 2072 shown in Fig. 8(B).

Each record of the stage number management table 2071 has: a field 20711 for registering a law/regulation that defines a life cycle including the object life stage; a field 20712 for registering a name of the object life stage in that law/regulation; and a field 20713 for registering a life stage number assigned to the object life stage.

Further, each record of the stage definition information management table 2072 has: a field 20721 for registering a company number of a company for which the definition information of the life stage is registered; a field 20722 for registering a law/regulation that defines the life cycle including the object life cycle; a field 20723 for registering a life stage number of the object life stage; and a field 20724 for registering the stage definition information that indicates basic processes that are assigned to the object life stage. In this example, as the definition of "Part processing" as a life stage of Eu, a company having the company number "CO-A-0001" assigns the basic process "Resin painting" of a small process, a company having the company number "CO-A-0002" assigns the basic process "Resin painting" of a small process excluding the basic processes of minimum units, "Cleaning" and "Painting", and a company having the company number "CO-A-0003" assigns the basic processes of minimum units, "Cleaning", "Painting" and "Drying".

Among the above-described tables, the company number management table 2011, the supply relation management table 2012, the basic process information management table 2021, the environmental load item management table 2051 and the stage number management table 2071 are stored in advance into the storage unit 20 by an administrator or the like of the environmental load evaluation support apparatus 1. On the other hand, the part number management table 2031, the part configuration management table 2032, the process number management table 2041, the process tying management table 2042, the environmental load management table 2052, the law-wise environmental load management table 2061 and the stage definition information management table 2072 are updated in their registration contents by users (makers and suppliers) of the environmental load evaluation support apparatus 1.

Returning to Fig. 1, the description is continued. The operation unit 10 comprises a configuration tree display processing unit 101, a part information registration processing unit 102, a process information registration processing unit 103, an environmental load calculation unit 104, and a life stage definition information registration processing unit 105.

The life stage definition information registration processing unit 105 registers a record of life stage definition information into the stage definition information management table 2072 according to a user's instruction.

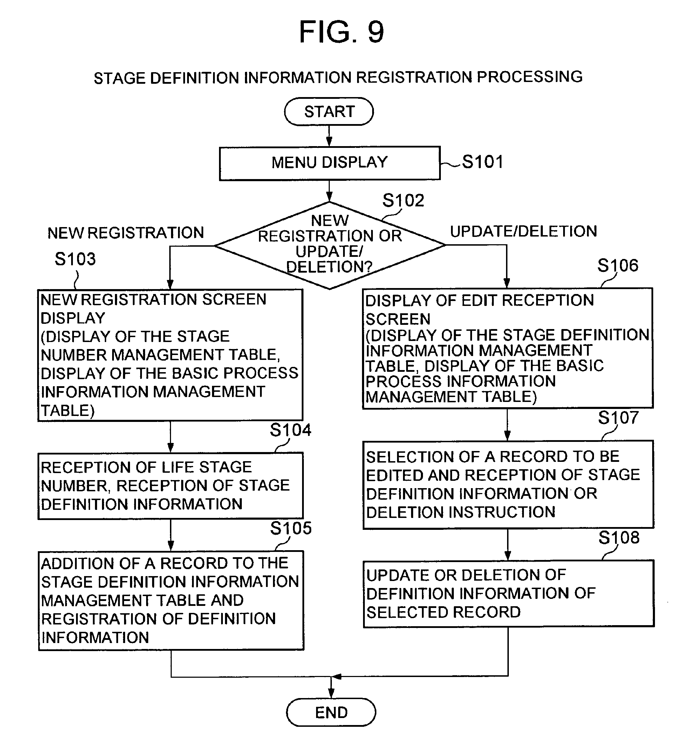

Fig. 9 is a flowchart for explaining life stage definition information registration processing by the life stage definition information registration processing unit 105. The flow is started when a user (who has input login information including a company number into the input-output unit 30 and has been authorized to log in by the operation unit 10) inputs a stage definition information registration request into the input-output unit 30.

First, the life stage definition information registration processing unit 105 displays a menu screen on the input-output unit 30 for allowing a choice between registration of a new record into the stage definition information management table 2072 and update/deletion of a record registered in the stage definition information management table 2072 (S101). When new registration of a record is received from a user through the input-output unit 30, the flow proceeds to S103. On the other hand, when update/deletion of a record is received, then the flow proceeds to S106 (S102).

In S103, the life stage definition information registration processing unit 105 reads each life stage's record registered in the stage number management table 2071, and each basic process' record from the basic process information management table 2021. Then, the life stage definition information registration processing unit 105 generates a new registration screen on which the records of the life stages are displayed in a list and the records of the basic processes are displayed in a tree as shown in Fig. 3(B), and displays the generated new registration screen on the input-output unit 30. A user can use the input-output unit 30 to select a life stage whose definition information is to be generated among the life stages whose records are displayed in the list on the new registration screen. Further, the user can select at least one desired basic process among the basic processes whose records are displayed in the tree and generate a formula of four arithmetic operations by using the selected basic processes, in order to generate stage definition information.

When the life stage definition information registration processing unit 105 receives a selection of life stage and the stage definition information from the user through the input-output unit 30 (S104), the life stage definition information registration processing unit 105 adds a record of new stage definition information to the stage definition information management table 2072. The life stage definition information registration processing unit 105 registers the company number that is received from the user at the time of log in, for example, into the field 2071 of the added record, the applicable law/regulation and the life stage number registered in the record of the selected life stage into the fields 20722 and 20723, and the stage definition information into the field 20724 (S105).

On the other hand, in S106, the stage definition information registration processing unit 105 reads records of stage definition information in which the company number received from the user at the time of, for example, his log-in is registered, from the stage definition information management table 2072, and reads the records of the basic processes from the basic process information management table 2021. Then, the stage definition information registration processing unit 105 generates an edit reception screen on which, for example, the records of respective pieces of stage definition information are displayed in a list and the records of the basic processes are displayed in a tree as shown in Fig. 3(B), and displays the generated edit reception screen on the input-output unit 30. The user can use the input-output unit 30 to select a piece of stage definition information that is to be updated or deleted among the pieces of stage definition information displayed in the list on the edit reception screen. Further, the user can select at least one desired basic process among the basic processes whose records are displayed in the tree and generate a formula of four arithmetic operations by using the selected basic processes, in order to generate new stage definition information.

When the stage definition information registration processing unit 105 receives a selection of stage definition information and the stage definition information from the user through the input-output unit 30 (S107), the stage definition information registration processing unit 105 updates the registration content of the field 20724 of the record of the selected stage definition information to the received stage definition information (S108). In the case where a deletion instruction is received instead of stage definition information, the stage definition information registration processing unit 105 deletes the record of the selected stage definition information from the stage definition information management table 2072.

Returning to Fig. 1, the description is continued. The configuration tree display processing unit 101 generates a configuration tree display screen of a desired part (or a product) according to a user's instruction, and displays the generated configuration tree display screen on the input-output unit 30.

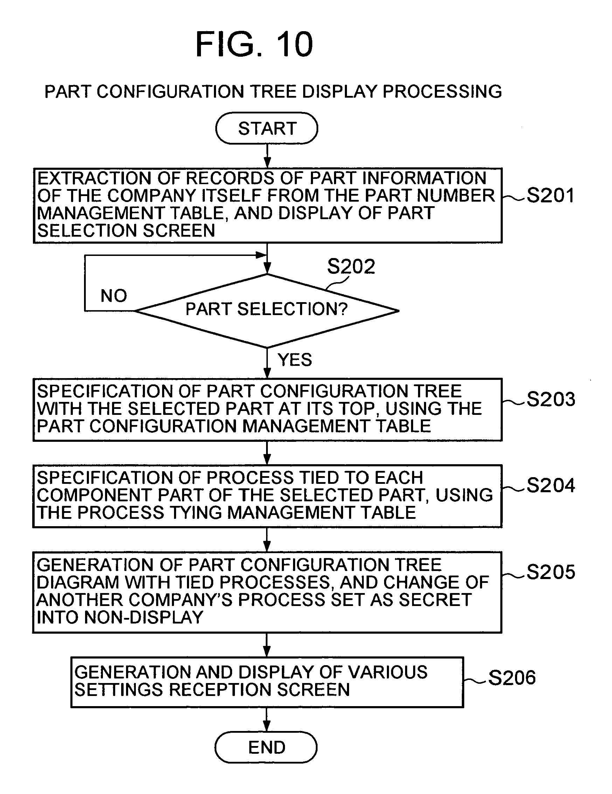

Fig. 10 is a flowchart for explaining part configuration tree display processing by the configuration tree display processing unit 101. The flow is started when a user (who has input login information including a company number into the input-output unit 30 and has been authorized to log in by the operation unit 10) inputs a part configuration tree display request into the input-output unit 30.

First, the configuration tree display processing unit 101 reads records of part information in which the company number received from the user at the time of, for example, his log-in is registered, from the part number management table 2031. Then, the configuration tree display processing unit 101 generates a part selection screen on which, for example, the records of respective pieces of part information are displayed in a list, and displays the generated part selection screen on the input-output unit 30 (S201). The user can use the input-output unit 30 to select a desired piece of part information from the records of the pieces of part information displayed in the list on the part selection screen.

When the configuration tree display processing unit 101 receives a selection of part information from the user through the input-output unit 30 (S202), the configuration tree display processing unit 101 uses the part configuration management table 2032 to specify a part configuration tree having the selected part at its top (S203). In detail, the configuration tree display processing unit 101 searches the part configuration management table 2032 for a record in which the selected part is registered as a parent part. When such a record can be retrieved, the configuration tree display processing unit 101 connects the selected part with a part/material registered as a child part/material in the retrieved record, by a parent-child line indicating a parent-child relationship (Here, the detailed information of the child part/material can be specified by searching the part number management table 2031 using the part number of the child part/material as a key). Then, the configuration tree display processing unit 101 searches the part configuration management table 2032 for a record in which the part/material (referred to as a noticed part) registered as the child part/material in the retrieved record is registered as a parent part. When such a part can be retrieved, the configuration tree display processing unit 101 further connects the noticed part with a part/material registered as a child part/material in the retrieved record, by a parent-child line. This processing is repeated until a record in which a noticed part is registered as a parent part can not be retrieved from the part configuration management table 2032.

Next, the configuration tree display processing unit 101 uses the process tying management table 2042 to specify a process that is tied to each component part/material of the selected part (S204). In detail, for each of all the parts/materials belonging to the part configuration tree specified in S203, the configuration tree display processing unit 101 searches the process tying management table 2042 for a record in which the part/material in question is registered as a tied part. When such a record can be retrieved, the configuration tree display processing unit 101 connects the part/material in question with the process registered in the retrieved record by a product line indicating a product relationship (Here, the detailed information of the process can be specified by searching the process number management table 2041 using the process number as a key).

When the part configuration tree and a process tied to each component part/material of the part configuration tree are specified as described above, the configuration tree display processing unit 101 generates a part configuration tree diagram with tied processes based on these specified contents (S205). Here, for each of the processes tied to the respective parts/materials, when the record of the process in question registered in the process number management table 2041 has a different company number from the company number received from the user at the time of, for example, his log-in, i.e., when the process in question is a process of another company than the company of the user himself, then the configuration tree display processing unit 101 examines whether the disclosure level registered in the record of the process in question is set to a level allowing display of the process name. In the case where the disclosure level is not set to a level allowing display of the process name, the configuration tree display processing unit 101 changes the display attribute of the process in question in the part configuration tree diagram to non-display. By this operation, the process in question becomes non-displayed in the part configuration tree diagram to users other than the company that performs the process in question.

Next, the configuration tree display processing unit 101 generates a various settings reception screen (a screen for receiving a part information registration instruction, a process information registration instruction and an environmental load setting instruction) including the part configuration tree diagram with the tied processes, and displays the generated various settings reception screen on the input-output unit 30 (S206).

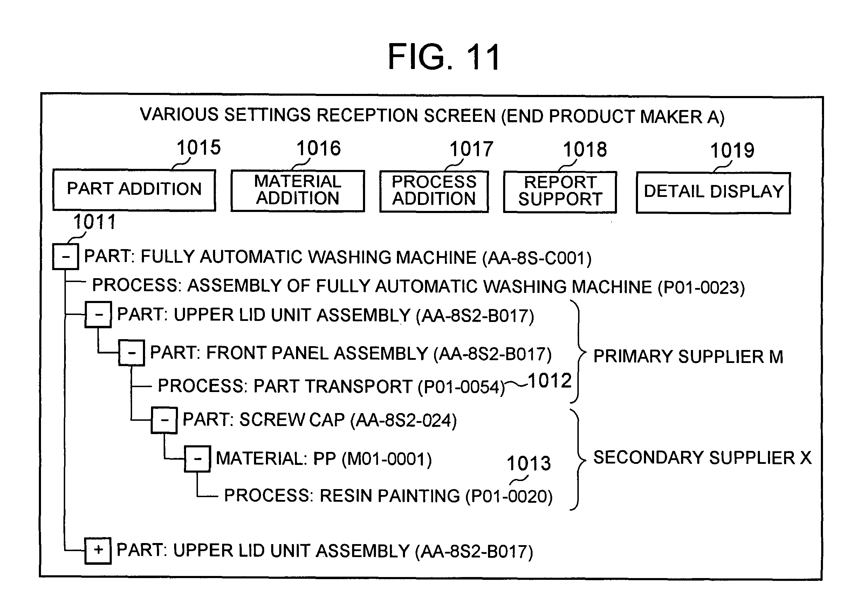

Fig. 11 is a view showing an example of the various settings reception screen displayed on the input-output unit 30 when the end product maker A selects a fully automatic washing machine (AA-8S-CO01). As shown in the figure, the various settings reception screen displays the part configuration tree 1011 with tied processes, having the fully automatic washing machine at the top of the tree. Here, the reference numeral 1012 indicates a process of the primary supplier M. In the case where the disclosure level of that process, which is registered in the process number management table 2041, is not set to a level allowing display of the process name, the process in question becomes non-display. Similarly, the reference numeral 1013 indicates a process of the secondary supplier X. In the case where the disclosure level of that process, which is registered in the process number management table 2041, is not set to a level allowing display of the process name, the process in question becomes non-display. Further, in the various settings reception screen, the reference numeral 1015 indicates a part information registration instruction button, the reference numeral 1016 a material information registration instruction button, the reference numeral 1017 a process information registration instruction button, the reference numeral 1018 a report support instruction button, and the reference numeral 1019 a detailed process information display button. In Fig. 11, it is possible that, when any part or process belonging to the part configuration tree 1011 is selected by cursor operation, the company number registered in the part information record (the part number management table 2031) of the selected part or the process information record (the process number management table 2041) of the selected process is used as a search key to search the company number management table 2011, so that the company name of the company having the company number in question is specified and the specified company name is displayed close to the selected part or process.

Returning to Fig. 1, the description is continued. The part information registration processing unit 102 registers information on a desired part (or a product or a material) into the part information storage unit 203 according to a user's instruction.

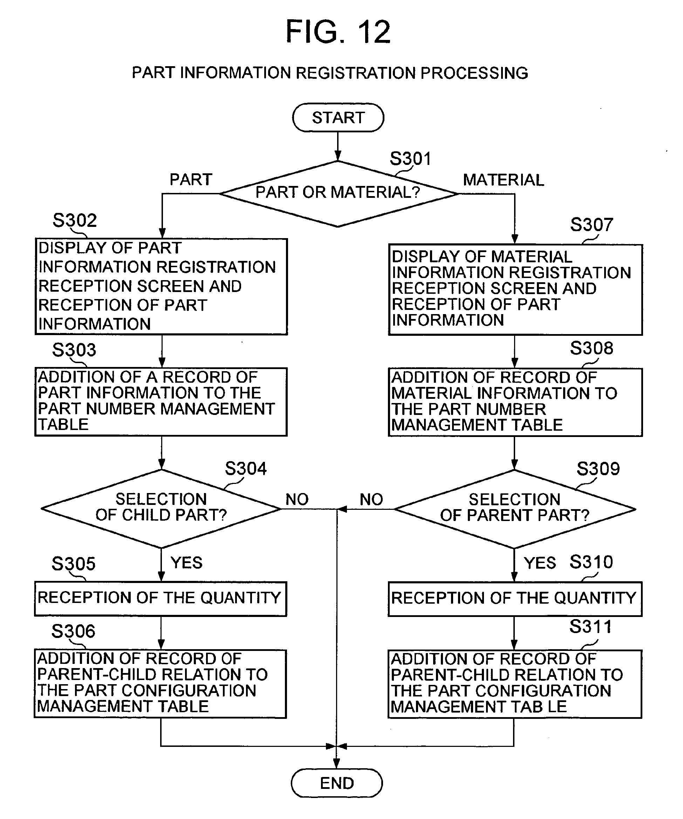

Fig. 12 is a flowchart for explaining part information registration processing by the part information registration processing unit 102. The flow is started when the part information registration instruction button 1015 or the material information registration instruction button 1016 is selected on the various settings reception screen as shown in Fig. 11.

First, the part information registration processing unit 102 proceeds to S302 when an instruction to register part information is given, or to S307 when an instruction to register material information is given.

In S302, the part information registration processing unit 102 displays a part information registration reception screen having an entry for inputting a part/material number of a part to be registered and an entry for inputting a name of that part, on the input-output unit 30, to receive the part/material number and the name from the user through the input-output unit 30. Next, the part information registration processing unit 102 adds a new record to the part number management table 2031 and registers the company number received from the user at the time of, for example, his log-in into the field 20311 of the record; the part/material number and the name received in S302 into the fields 20312 and 20313; and the type "Part" into the field 20314 (S303).

Next, the part information registration processing unit 102 examines whether a child part/material of the part (referred to as a noticed part) whose record is added to the part number management table 2031 in S303 has been selected or not (S304). For example, when the part information registration instruction button 1015 is selected in a state that any part/material in the part configuration tree 1011 is selected on the various settings reception screen as shown in Fig. 11, it is taken that the part/material in question is selected as a child part. In the case where a child part has not been selected, the flow is ended. On the other hand, in the case where a child part has been selected, the quantity (number or weight) of this child part/material used for the noticed part is received from the user through the input-output unit 30 (S305). Then, the part information registration processing unit 102 adds a new record to the part number management table 2032, and registers the company number of the noticed part into the field 20321 of the record in question, the company number of the child part/material into the field 20322, the part/material number of the noticed part into the field 20323, the part/material number of the child part/material into the field 20324, and the quantity received in S305 into the field 20325 (S306). Here, the company numbers of the noticed part and the child part/material can be obtained by searching the part number management table 2031 using the part/material numbers as keys.

On the other hand, in S307, the part information registration processing unit 102 displays a material information registration reception screen having an entry for inputting a part/material number of a material to be registered and an entry for selecting a name of the material in question from a list of previously-registered material names, on the input-output unit 30, to receive the part/material number and the name from the user through the input-output unit 30. Next, the part information registration processing unit 102 adds a new record to the part number management table 2031 and registers the company number received from the user at the time of, for example, his log-in into the field 20311 of the record; the part/material number and the name received in S307 into the fields 20312 and 20313; and the type "Material" into the field 20314 (S308).

Next, the part information registration processing unit 102 examines whether a parent part of the material (referred to as a noticed material) whose record is added to the part number management table 2031 in S308 has been selected or not (S309). For example, it may be defines that, when the material information registration instruction button 1016 is selected in a state that any part in the part configuration tree 1011 is selected on the various settings reception screen as shown in Fig. 11, the part in question is selected as a parent part. In the case where a parent part has not been selected, the flow is ended. On the other hand, in the case where a parent part has been selected, the quantity (weight) of the noticed material used for the parent part is received from the user through the input-output unit 30 (S310). Then, the part information registration processing unit 102 adds a new record to the part number management table 2032, and registers the company number of the parent part into the field 20321 of the record in question, the company number of the noticed material into the field 20322, the part/material number of the parent part into the field 20323, the part/material number of the noticed material into the field 20324, and the quantity received in S310 into the field 20325 (S311). Here, the company numbers of the parent part and the noticed material can be obtained by searching the part number management table 2031 using the part/material numbers as keys.

Returning to Fig. 1, the description is continued. The process information registration processing unit 103 registers information on a desired process into the process information storage unit 204 according to a user's instruction.

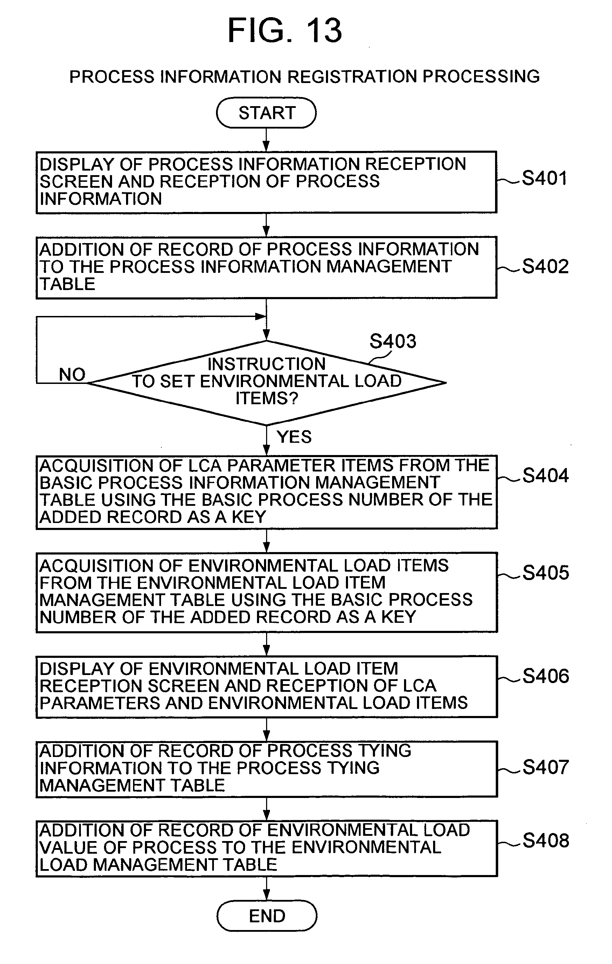

Fig. 13 is a flowchart for explaining process information registration processing by the process information registration processing unit 103. The flow is started when the process information registration instruction button 1017 is selected in a state that any part (or product or material) in the part configuration tree 1011 is selected as a tied part on the various settings reception screen as shown in Fig. 11.

First, the process information registration processing unit 103 reads all the records from the basic process management table 2021, and classifies the basic processes of the records into the large classification, the middle classification, the small classification and the minimum units, based on the basic process numbers (each expressed as a large classification + a middle classification + a small classification + a minimum unit). Then, the process information registration processing unit 103 generates a process information reception screen for receiving a process number, a name and a disclosure level of a process to be registered and a basic process corresponding to the process to be registered, and displays the generated process information reception screen on the input-output unit 30. Then, the process information registration processing unit 103 receives a process number, a name and a disclosure level of a process to be registered and a basic process corresponding to the process to be registered (S401).

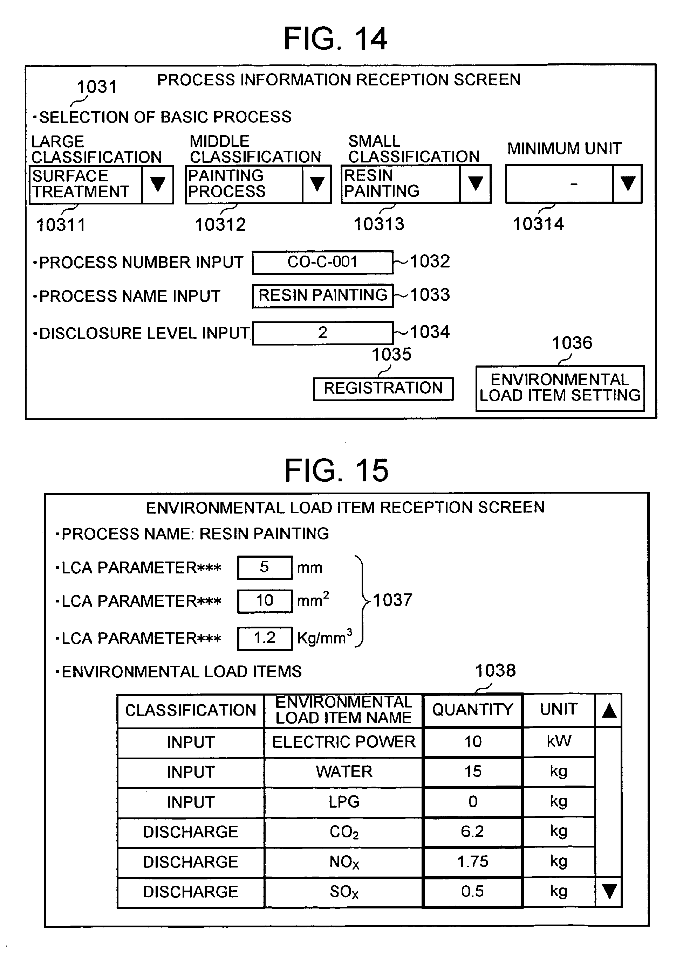

Fig. 14 is a view showing an example of the process information reception screen. As shown in the figure, the process information reception screen has a basic process selection entry 1031, a process number input entry 1032, a process name input entry 1033, a disclosure level input entry 1034, a registration button 1035 and an environmental load item setting instruction button 1036.

The basic process selection entry 1031 has: a large classification selection entry 10311 for displaying basic processes of large classifications in a list by a pull-down menu and for selecting a desired basic process out of the displayed basic processes; a middle classification selection entry 10312 for displaying basic processes of middle classifications, which belong to the large classification selected in the entry 10311, in a list by a pull-down menu, and for selecting a desired basic process out of the displayed basic processes; a small classification selection entry 10313 for displaying basic processes of small classifications, which belong to the middle classification selected in the entry 10312, in a list by a pull-down menu, and for selecting a desired basic process out of the displayed basic processes; and a minimum unit selection entry 10314 for displaying basic processes of minimum units, which belong to the small classification selected in the entry 10313, in a list by a pull-down menu, and for selecting a desired basic process out of the displayed basic processes. In the case where a basic process is selected in the entry 10311 and a basic process is not selected in the entry 10312, it is taken that the basic process of a large classification selected in the entry 10311 is selected. In the case where basic processes are selected in the entries 10311 and 10312 and a basic process is not selected in the entry 10313, it is taken that the basic process of middle classification selected in the entry 10312 is selected. In the case where basic processes are selected in the entries 10311 - 10313 and a basic process is not selected in the entry 10314, it is taken that the basic process of a small classification selected in the entry 10313 is selected. And, in the case where basic processes are selected in all the entries 10311 - 10314, it is taken that the basic process of a minimum unit selected in the entry 10314 is selected.

It is possible to input data directly into the process number input entry 1032, the process name input entry 1033 and the disclosure level input entry 1034. The registration button 1035 is used for registering the process information specified using the entries 1031- 1034. And, the environmental load item setting button 1036 is used for receiving an instruction to set data of environmental load items and LCA parameter items.

Next, the process information registration processing unit 103 adds a new record to the process number management table 2041, and registers the company number received from the user at the time of, for example, his log-in into the field 20411 of the record in question, the process number, the process name, the disclosure level and the basic process number of the basic process received in S401 into the fields 20412 - 20415 (S402).

Next, when the process information registration processing unit 103 receives an instruction to set data of environmental load items and LCA parameter items from the user through the input-output unit 30 (S403), then the process information registration processing unit 103 searches the basic process information management table 2021 using the basic process number of the record added to the process number management table 2041 in S402 as a key, to specify the LCA parameter items registered in a record having that basic process number (large classification + middle classification + small classification + minimum unit) (S404). Similarly, using the basic process number as a key, the process information registration processing unit 103 searches the environmental load item management table 2051, to specify the environmental load item, the unit and the input/discharge classification registered in each record having the basic process number in question (S405).

Then, the process information registration processing unit 103 generates an environmental load item reception screen having input entries 1037 for the LCA parameter items specified in S404 as shown in Fig. 15 and input entries 1038 for the environmental load items specified together with the units and the input/discharge classifications respectively in S405, and displays the generated environmental load item reception screen on the input-output unit 30. Then, the process information registration processing unit 103 receives respective set values of the LCA parameter items and respective quantities (input quantities/discharge quantities) of the environmental load items from the user through the input-output unit 30 (S406).

Next, the process information registration processing unit 103 adds a new record to the process tying management table 2042, and registers: the company number received from the user at the time of, for example, his log-in into the fields 20421 of the record in question; the part/material number of the part selected as the tied part into the field 20422; the process number received in S401 into the field 20423; and the respective set values of the LCA parameter items received in S406 into the fields 20425 (S407). Similarly, the process information registration processing unit 103 adds a new record to the environmental load management table 2052 for each of the environmental load items received in S406. Then, for each of the added records, the process information registration processing unit 103 registers: the company number received from the user at the time of, for example, his log-in into the field 20521 of the record in question; the process number received in S401 into the field 20522; the environmental load item corresponding to the record in question into the field 20523; the quantity of the environmental load item corresponding to the record in question, which has been received in S406, into the field 20524; and the input/discharge classification of the environmental load item corresponding to the record in question into the field 20525 (S408).

Returning to Fig. 1, the description is continued. The environmental load calculation unit 104 displays information on the environmental load of a desired process according to a user's instruction. Further, the environmental load calculation unit 104 aggregates pieces of environmental load information for each life stage of a life cycle defined in a desired law/regulation and registers the aggregated information into the law-wise environmental load storage unit 206.

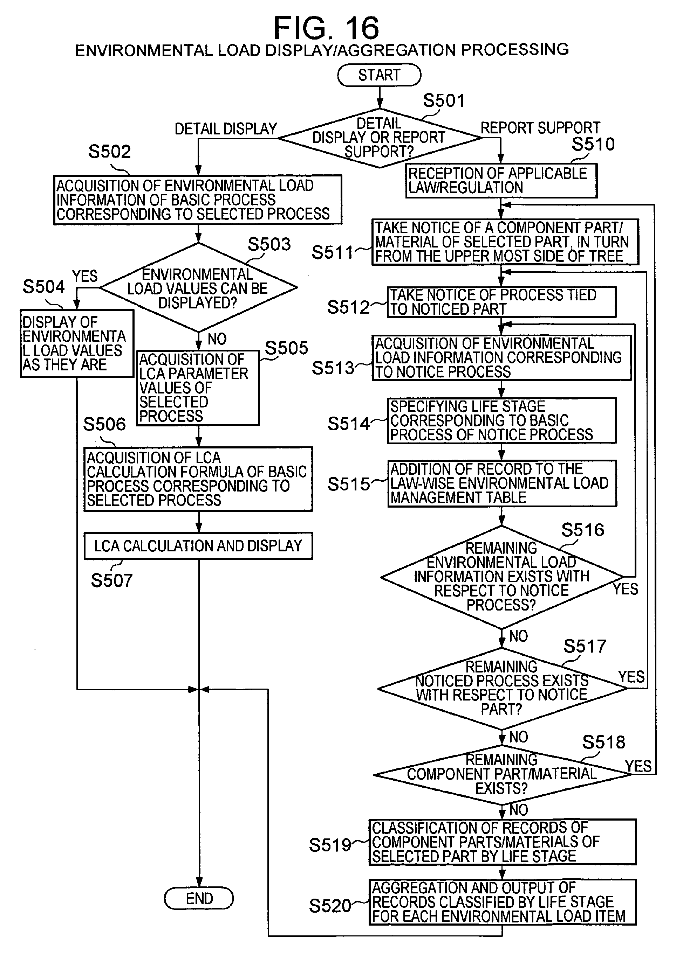

Fig. 16 is a flowchart for explaining environmental load display/aggregation processing by the environmental load calculation unit 104. The flow is started when the report support 1018 is selected in a state that any part (or product or material) in the part configuration tree 1011 is selected as a report object part on the various settings reception screen as shown in Fig. 11, or when the detail display button 1019 is selected in a state that any process is selected as a display object process.

First, the environmental load calculation unit 104 examines whether an instruction received from the user through the input-output unit 30 is a detail display instruction or a report support instruction (S501). When the detail display button 1019 is selected in a state that any process is selected as a display object process in the part configuration tree 1011 shown in Fig. 11, it is taken that a detail display instruction is received and the flow proceeds to S502. On the other hand, when the report support 1018 is selected in a state that any part is selected as a report object part, it is taken that a report support instruction is received and the flow proceeds to S510.

In S502, from the environmental load management table 2052, the environmental load calculation unit 104 specifies records having the process number of the display object process and the company number received from the user at the time of, for example, his log-in, and obtains the environmental load information (the environmental load item, the quantity and the input/discharge classification) of each specified record (S502). Next, from the process number management table 2041, the environmental load calculation unit 104 specifies a record having the process number of the display object process and the company number of the user, and judges whether the disclosure level of the specified record permits disclosure of the environmental load information (the environmental load item, the quantity and the input/discharge classification) (S503). In the case where disclosure is permitted, the environmental load calculation unit 104 displays the environmental load information obtained in S502 on the input-output unit 30 (S504). For example, the environmental load information is displayed in a balloon close to the display object process in the part configuration tree 1011 shown in Fig. 11. On the other hand, in the case where disclosure is not permitted, the environmental load calculation unit 104 specifies a record having the process number of the display object process and the company number of the user from the process tying management table 2042, and obtains the LCA parameter values registered in the specified record (S505). Further, from the basic process information management table 2021, the environmental load calculation unit 104 specifies a record having the basic process number (large classification + middle classification + small classification + minimum unit) registered in the record specified from the process number management table 2041 in S503, and obtains the LCA calculation formula and the LCA parameter items of the specified record (S506). Then, the environmental load calculation unit 104 performs LCA calculation by inputting the environmental load values and the LCA parameter values obtained in S502 and S505 into the LCA calculation formula obtained in S506, to calculate the LCA value. Then, the environmental load calculation unit 104 displays the calculated LCA value on the input-output unit 30 (S507). For example, the LCA value is displayed in a balloon close to the display object process in the part configuration tree 1011 shown in Fig. 11.

On the other hand, in S510, the environmental load calculation unit 104 receives designation of an applicable law/regulation from the user through the input-output unit 30. For example, the environmental load calculation unit 104 displays a list of laws/regulations that require report of environmental load information in each life stage of a life cycle of a product, and allows a user to select a desired law/regulation from the list. Next, the environmental load calculation unit 104 selects a part/material that is an unnoticed part/material among the parts/materials constituting the report object part and is positioned on the end side of the part configuration tree 1011, and determines the selected part/material as a noticed part (S511). Next, from the process tying management table 2042, the environmental load calculation unit 104 specifies one record that has not been specified yet and has the part/material number of the noticed part and the company number of the user, and determines the process registered in the specified record as a noticed process (S512). Then, from the environmental load management table 2052, the environmental load calculation unit 104 specifies one record that has not been specified yet and has the process number of the noticed process and the company number of the user, and obtains the environmental load information (the environmental load item, the quantity and the input/discharge classification) registered in the specified record (S513). Further, using the process number management table 2041, the environmental load calculation unit 104 specifies the basic process corresponding to the noticed process. Then, from the stage definition information management table 2072, the environmental load calculation unit 104 specifies a record that has the applicable law/regulation, the company number of the user, and the stage definition information including the specified basic process, and obtains the life stage number of the specified record (S514). Then, the environmental load calculation unit 104 adds a new record to the law-wise environmental load management table 2061, and registers: the company number of the user into the field 20611 of the record in question; the applicable law/regulation into the field 20612; the part/material number of the noticed part into the field 20613; the life stage number obtained in S514 into the field 20614; and the environmental load information (the environmental load item, the input/discharge classification and the quantity) obtained in S513 with respect to the noticed process into the fields 20615 - 20617 (S515).

Now, in the case where there exists a record that has not been specified yet and has the process number of the noticed process and the company number of the user in the environmental load management table 2052, the environmental load calculation unit 104 returns to S513. On the other hand, in the case where all the records have been specified, the environmental load calculation unit 104 proceeds to S517 (S516). Further, in S517, in the case where there exists a record that has not been specified yet and has the part/material number of the noticed part and the company number of the user in the process tying management table 2042, the environmental load calculation unit 104 returns to S512. On the other hand, in the case where all the records have been specified, the environmental load calculation unit 104 proceeds to S518. Further, in S518, in the case where there exists a part/material that has not been noticed yet and is a component of the report object part, the environmental load calculation unit 104 returns to S511. Otherwise, the environmental load calculation unit 104 proceeds to S519.

In S519, from the law-wise environmental load management table 2061, the environmental load calculation unit 104 extracts all records having the company number of the user, the applicable law/regulation, and the part/material number of the report object part or a component part/material of the report object part, and then, classifies the extracted records based on the life stage numbers of those records. Then, the records classified according to the life stage number are further classified by combination of the environmental load item and the input/discharge classification. The environmental load calculation unit 104 aggregates the quantities of the environmental load item registered in the classified records. Then, the environmental load calculation unit 104 outputs the aggregates values in association with the life stage number, the environmental load item and input/discharge classification (S520). Accordingly, for each component life stage of the life cycle of the applicable law/regulation, the environmental load values of the processes that the user has assigned to the life stage in question are aggregated and output by combination of the environmental load item and the input/discharge classification.

The environmental load evaluation support apparatus 1 of the above configuration can be implemented when a CPU 901 executes a program loaded onto a memory 902 on an ordinary computer system comprising the CPU 901, the memory 902, an external storage 903 such as an HDD, a reader 904 for reading data from a storage medium such as a CD-ROM, a DVD-ROM or lC card, an input unit 906 such as a keyboard and a mouse, an output unit 907 such as a monitor or a printer, a communication unit 908 for connecting with a network or the like, and a bus 909 connecting these component units with one another as shown in Fig. 17, for example. This program may be downloaded from a storage medium through the reader 904 or from a network through the communication unit 908 onto the external storage 903, and then loaded onto the memory 902 and executed by the CPU 901. Or, the program may be directly loaded onto the memory 902 and executed by the CPU 902, without through the external storage 903. In those cases, the memory 902 and the external storage 903 are used as the storage unit 20. Further, the reader 904, the input unit 906, the output unit 907 and the communication unit 908 correspond to the input-output unit 30.

Hereinabove, one embodiment of the present invention has been described.

In the above embodiment, a user can originally define each life stage of a life cycle defined by a law/regulation such as EuP, by using basic processes common to users. Further, processes employed by a user for himself are managed in association with those basic processes. As a result, even if definitions of life stages are different between makers, environmental load information of a process employed by a supplier for himself can be incorporated into a life stage that is defined by a maker and corresponds to that process of the supplier. Thus, even if definitions of life stages of products are different between makers, it is not necessary for a supplier to register data of input and discharge in each life stage for each maker.

Further, in the above embodiment, a disclosure level of environmental load information can be set for each process. As a result, when a part configuration tree in which a process of a user is tied to some part/material is displayed to a third party other than the user, the user himself can determine whether the environmental load information of the process should be displayed as it is, or the LCA calculation should be performed to display the LCA value, or the process itself should not be disclosed. Thus, data that a supplier does not want to disclose can be made secret even to a maker to which his part is supplied.

### [Second Embodiment]

In the above-described first embodiment, user's original processes are previously associated one-to-one with basic processes. And, environmental load information of a user's original process is received from the user and managed as environmental load information of a basic process corresponding to that original process. In contrast with this, a second embodiment of the present invention does not use user's original processes. Environmental load information of a basic process is directly received from a user and managed. Accordingly, an environmental load evaluation support apparatus of the present embodiment is different from the environmental load evaluation support apparatus 1 of the first embodiment shown in Fig. 1 in the following points.

### 1. Process Information Storage Unit 204

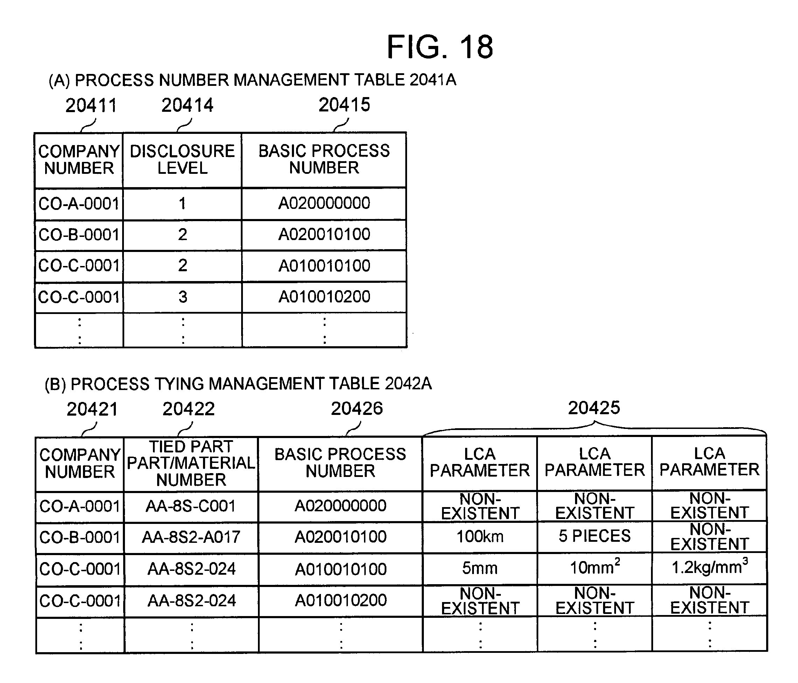

A process information storage unit 204 of the present embodiment holds a process number management table 2041A shown in Fig. 18(A) and a process tying management table 2042A shown in Fig. 18(B).

Each record of the process number management table 2041A has: a field 20411 for registering a company number of a company for which process information of a basic process is registered; a field 20414 for registering a disclosure level of the basic process in question; and a field 20415 for registering a basic process number of the basic process in question. As described above, the present embodiment does not use user's original processes. Environmental load information of a basic process is directly received from a user and managed. Accordingly, differently from a record of the process number management table 2041 shown in Fig. 5(A), a record of the process number management table 2041A of the present embodiment does not have fields 20412 and 20413 for registering user's original process number and process name.

Further, each record of the process tying management table 2042A is different from a record of the process tying management table 2042 shown in Fig. 5(B) in that a record of the process tying management table 2042A has a field 20426 for registering a basic process number of a basic process instead of the field 20423 for registering a process number of a user's original process. The other fields are same as ones of a record of the process tying management table 2042 shown in Fig. 5(B).

### 2. Process Environmental Load Storage Unit 205

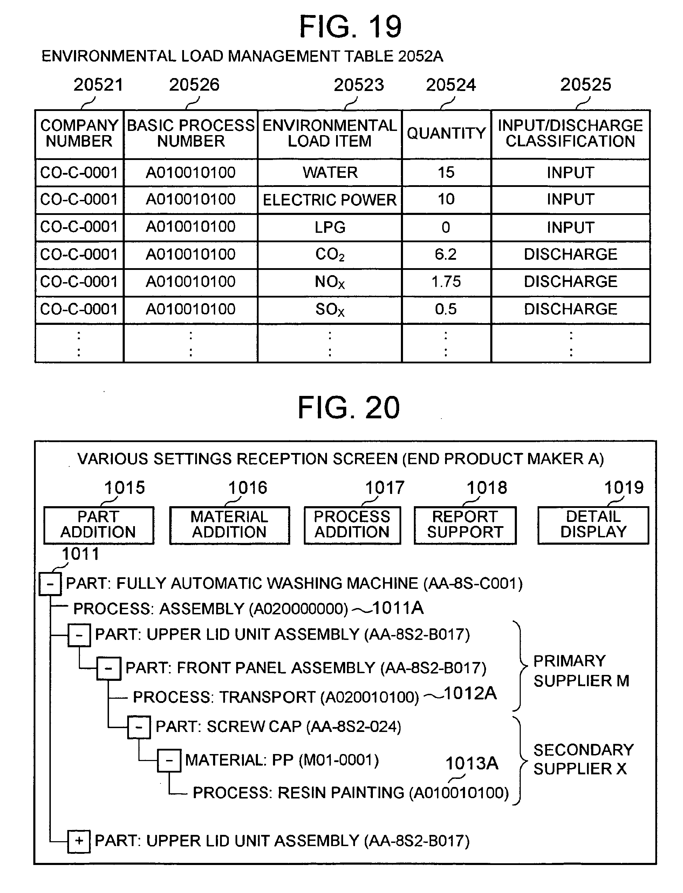

A process environmental load storage unit 205 of the present embodiment holds the environmental load item management table 2051 shown in Fig. 6(A) and an environmental load management table 2052A shown in Fig. 19.

Each record of the environmental load management table 2052A is different from a record of the environmental load management table 2052 shown in Fig. 6(B) in that a record of the environmental load management table 2052A has a field 20526 for registering a basic process number of a basic process instead of the field 20522 for registering a process number of a user's original process. The other fields are same as ones of a record of the environmental load management table 2052 shown in Fig. 6(B).

### 3. Configuration Tree Display Unit 101

In S204 of the part configuration tree display processing shown in Fig. 10, a configuration tree display processing unit 101 uses the process tying management table 2042A to specify a basic process tied to each component part/material of the selected part (S204). In detail, for each of all the parts/materials belonging to the part configuration tree specified in S203, the process tying management table 2042A is searched for a record having the part/material in question as the tied part. When such a record can be retrieved, the part/material in question and the basic process registered in the retrieved record are connected by a product line indicating a product relationship (Here, the detailed information of the basic process can be specified by searching the process number management table 2041A and the basic process information management table 2021 using the basic process number as a key)..

Further, in S205, when the part configuration tree and the basic processes tied to the parts/materials in the part configuration tree are specified, the configuration tree display processing unit 101 generates a part configuration tree diagram with tied basic processes based on these specified contents. Here, for each of the basic processes tied to the respective parts/materials, when the basic process in question registered in the process number management table 2041A has a different company number from the company number received from the user at the time of, for example, his log-in, i.e., when the basic process in question is a basic process of another company than the company of the user himself, then the configuration tree display processing unit 101 examines whether the disclosure level registered in the record of the basic process in question is set to a level allowing display of the basic process name. In the case where the disclosure level is not set to a level allowing display of the basic process name, the configuration tree display processing unit 101 changes the display attribute of the basic process in question in the part configuration tree diagram to non-display. By this operation, the basic process in question becomes non-displayed in the part configuration tree diagram to users other than the company that performs the basic process in question.

Further, in S206, the configuration tree display processing unit 101 generates a various settings reception screen (a screen for receiving a part information registration instruction, a process information registration instruction and an environmental load setting instruction) including the part configuration tree diagram with the tied basic processes, and displays the generated various settings reception screen on the input-output unit 30.

Fig. 20 is a view showing an example of a various settings reception screen displayed on the input-output unit 30 when the end product maker A selects the fully automatic washing machine (AA-8S-C001). As shown in the figure, the various settings reception screen of the present embodiment is basically similar to the various settings reception screen of the first embodiment shown in Fig. 11. However, as the process information, is shown information on basic processes common to the maker and the suppliers (1011A, 1012A, 1013A), instead of process information originally defined by the maker and the suppliers.

### 4. Process Information Registration Processing Unit 103

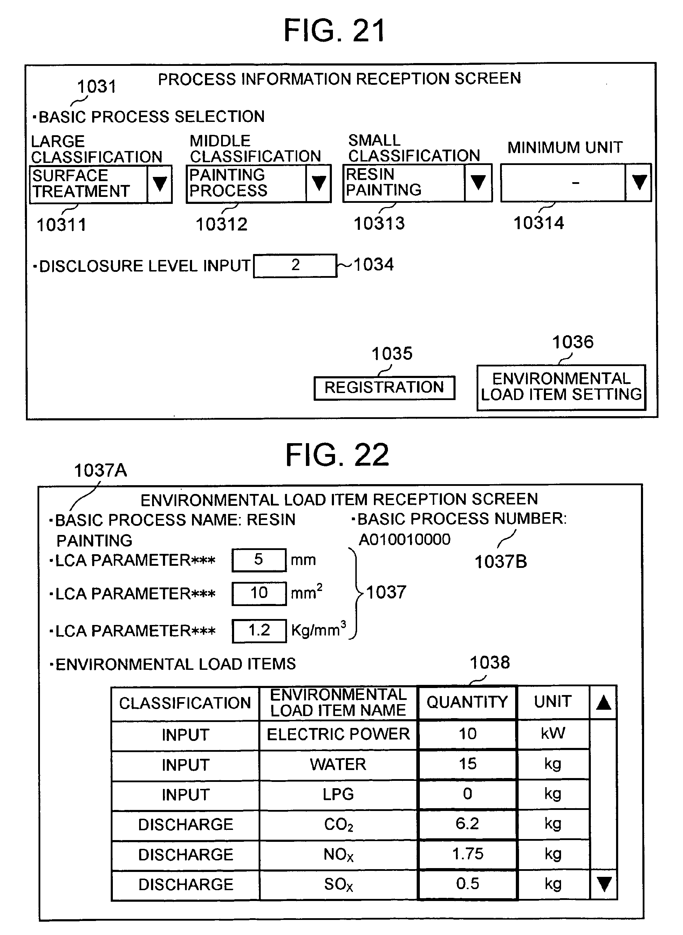

In S401 of the process information registration processing shown in Fig. 13, the process information registration processing unit 103 displays a process information reception screen as shown in Fig. 21 on the input-output unit 30. And, the process information registration processing unit 103 receives a basic process number and a disclosure level of a basic process to be registered, from a user through the input-output unit 30. As described above, the present embodiment does not use a user's original process. Environmental load information of a basic process is directly received from a user and managed. Accordingly, the process information reception screen shown in Fig. 14 omits the process number input entry 1032 and the process name input entry 1033 from the process information reception screen of the first embodiment shown in Fig. 14.

Further, in S402, the process information registration processing unit 103 adds a new record to the process number management table 2041A, and registers: the company number received from the user at the time of, for example, his log-in into the field 20411 of the record in question; and the disclosure level and the basic process number of the basic process received in S401 into the fields 20414 and 20415.

Further, in S406, the process information registration processing unit 103 generates an environmental load item reception screen as shown in Fig. 22, and displays the generated screen on the input-output unit 30. And, the process information registration processing unit 103 receives respective set values of the LCA parameter items and the respective quantities (input quantities/discharge quantities) of the environmental load items from the user through the input-output unit 30. As described above, the present embodiment does not use a user's original process. Environmental load information of a basic process is directly received from a user and managed. Accordingly, in the environmental load item reception screen shown in Fig. 22, a basic process name 1037A and a basic process number 1037B are displayed, instead of displaying a user's original process name. In this point, the environmental load item reception screen shown in Fig. 22 is different from the environmental load item reception screen of the first embodiment shown in Fig. 15.

Further, in S407, the process information registration processing unit 103 adds a new record to the process tying management table 2042A, and registers: the company number received from the user at the time of, for example, his log-in into the field 20421 of the record in question; the part/material number of the part selected as the tied part into the field 20422; the basic process number received in S401 into the field 20426; and the respective set values of the LCA parameter items received in S406 into the fields 20425.

Further, in S408, the process information registration processing unit 103 adds a new record to the environmental load management table 2052A, for each of the environmental load items whose quantities are received in S406. Then, for each of the added records, the process information registration processing unit 103 registers: the company number received from the user at the time of, for example, his log-in into the fields 20521 of the record in question; the basic process number received in S401 into the field 20526; the environmental load item corresponding to the record in question into the field 20523; the quantity received in S406 with respect to the environmental load item corresponding to the record in question into the field 20524; and the input/discharge classification of the environmental load item corresponding to the record in question into the field 20525.

### 5. Environmental Load Calculation Unit 104

In S502 of the environmental load display/aggregation processing shown in Fig. 16, the environmental load calculation unit 104 specifies records having the basic process number of the display object process and the company number received from the user at the time of, for example, his log-in, from the environmental load management table 2052A, and obtains the environmental load information (the environmental load item, the quantity and the input/discharge classification) of each specified record.

Further, in S503, the environmental load calculation unit 104 specifies a record having the basic process number of the display object process and the user's company number from the process number management table 2041A, and judges whether the disclosure level of the record permits disclosure of the environmental load information (the environmental load item, the quantity and the input/discharge classification).

Further, in S505, the environmental load calculation unit 104 specifies a record having the basic process number of the display object process and the user's company number from the process tying management table 2042A, and obtains the LCA parameter values registered in the specified record.

Further, in S506, the environmental load calculation unit 104 specifies a record having the basic process number of the display object process from the basic process information management table 2021, and obtains the LCA calculation formula and the LCA parameter items of the specified record.

Further, in S512, the environmental load calculation unit 104 specifies one record that has not been specified yet and has the part/material number of the noticed part and the user's company number from the process tying management table 2042A, and determines the basic process registered in the specified record as a noticed process.

Further, in S513, the environmental load calculation unit 104 specifies one record that has not been specified yet and has the basic process number of the noticed process and the user's company number from the environmental load management table 2052A, and obtains the environmental load information (the environmental load item, the quantity and the input/discharge classification) registered in the specified record.

Further, in S514, the environmental load calculation unit 104 specifies a record that has the applicable law/regulation, the user's company number and the stage definition information including the basic process number of the noticed process, and obtains the life stage number of the specified record.

Hereinabove, the second embodiment of the present invention has been described.

In the second embodiment, each life stage of a life cycle defined by a law/regulation such as EuP can be defined by a user by himself using basic processes common to the users. Owing to this arrangement, even if definitions of life stages are different between makers, a supplier can incorporate environmental load information of a basic process into a life stage that is defined by a maker and corresponds to the basic process in question. Accordingly, even if definitions of life stages of products are different between makers, it is not necessary for a supplier to register data of input and discharge in each life stage for each maker.

Further, similarly to the first embodiment, also in the second embodiment, data that a supplier does not want to disclose can be made secret even to a maker to which his part is supplied.

### [Third Embodiment]

In the above-described second embodiment, environmental load information is received from a user for each basic process. In contrast with this, in a third embodiment of the present invention, environmental load information can be received from a user either for each basic process or for each part. Accordingly, an environmental load evaluation support apparatus of the present embodiment is different from the environmental load evaluation support apparatus of the second embodiment in the following points.

### 1. Part Information Registration Processing Unit 102

A part information registration processing unit 102 of the present embodiment performs part environmental load information registration processing for registering environmental load information of a part, in addition to the above-described part information registration processing (See Fig. 12).

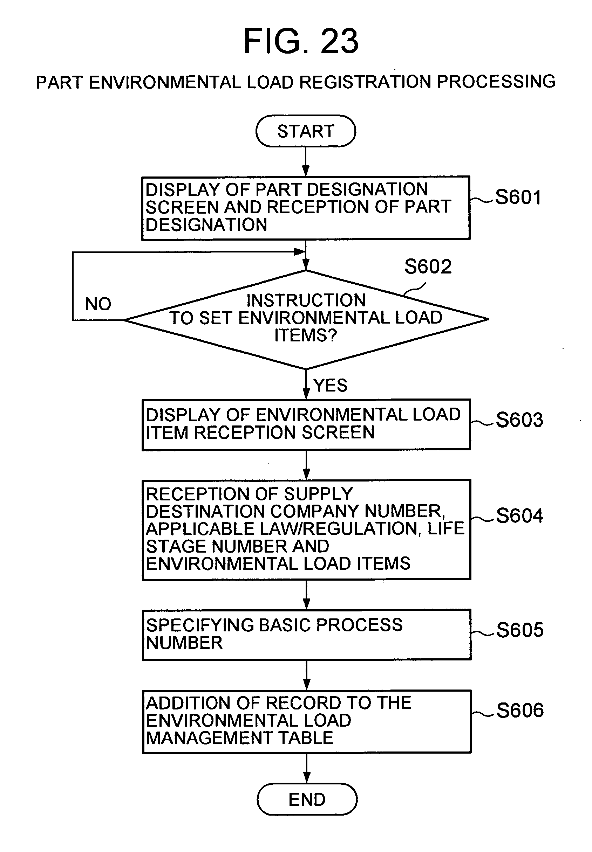

Fig. 23 is a flowchart for explaining the part environmental load information registration processing by the part information registration processing unit 102. The flow is started when a part environmental load information registration button not shown is selected in a various settings reception screen as shown in Fig. 11.

First, the part information registration processing unit 102 generates a part designation screen for designating a part for which environmental load items are to be registered, and displays the generated screen on the input-output unit 30. Then, the part information registration processing unit 102 receives a company number, a part/material number and a part name of a part for which environmental load items are to be registered (S601).

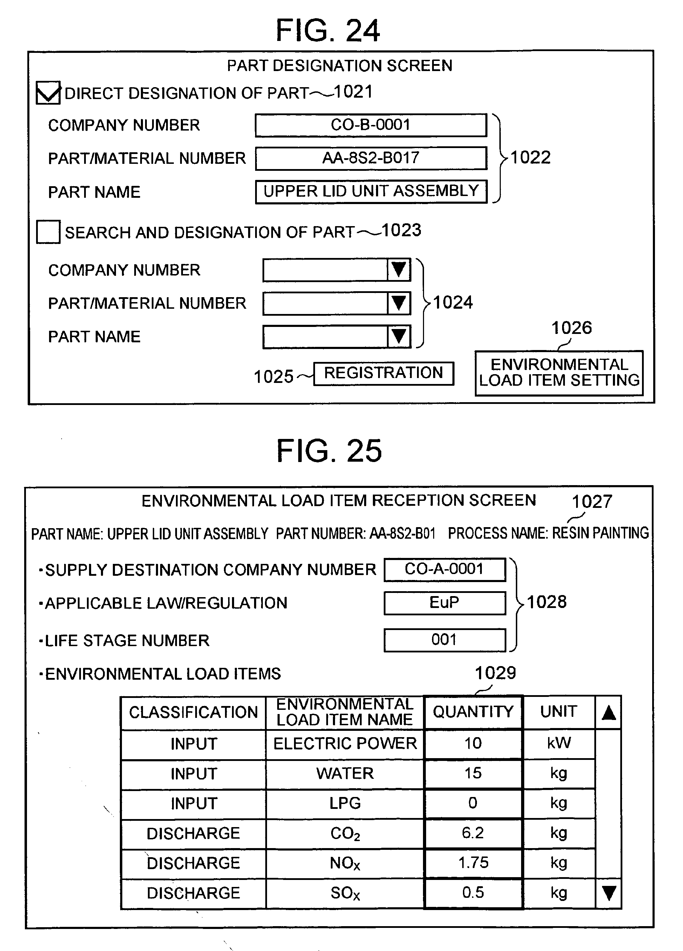

Fig. 24 is a view showing an example of the part designation screen. As shown in the figure, the part designation screen has: a check box 1021 that is selected when information on a part is directly designated; a check box 1023 that is selected when information on a part is retrieved from the part number management table 2031; input entries 1022 for inputting a company number, a part/material number and a part name of a part when the check box 1021 is checked; selection entries 1024 for selecting a company number, a part/material number and a part name of a part from the part information management table 2031 by a pull-down menu; a registration button 1025; and an environmental load item setting instruction button 1026. The environmental load item setting instruction button 1026 is used for receiving an instruction to set data of environmental load items of the part designated in this part designation screen. And, the registration button 1025 is used for registering an instruction to set data of environmental load items of the part designated in this part designation screen into the environmental load management table 2052.

A user checks either the check box 1021 or the check box 1023 through the input-output unit 30. In the case where the check box 1021 is checked, the user directly inputs a company number, a part/material number and a part name of a part into the input entries 1022. On the other hand, in the case where the check box 1023 is checked, the user selects a company number, a part/material number and a part name of a part, by using the selection entries 1024. Then, when the user selects the environmental load item setting instruction button 1026, the part information registration processing unit 102 detects it (S602). And, the part information registration processing unit 102 generates an environmental load item reception screen having: a display column 1027 displaying the part name and the part/material number of the part designated in the part designation screen; entries 1028 for selecting a company number of a supply destination company (i.e. a company to which the part is supplied), an applicable law/regulation and a life stage number; and entries 1029 for all the environmental load items that have been set previously, as shown in Fig. 25, and displays the generated screen on the input-output unit 30 (S603). Then, the part information registration processing unit 102 receives a company number of a supply destination company, an applicable law/regulation and a life stage number and respective quantities (input quantities/discharge quantities) of the environmental load items concerned from the user through the input-output unit 30 (S604).

Next, the part information registration processing unit 102 searches the stage definition information management table 2072 for a record having the company number of the supply destination company and the life stage number received in S604, and specifies the stage definition information registered in the retrieved record. Then, the part information registration processing unit 102 specifies a basic process number that belongs to the uppermost classification described in the specified stage definition information (S605). Then, the part information registration processing unit 102 adds a new record to the environmental load management table 2052A for each environmental load item whose quantity has been received in S604. Then, for each of the added records, the part information registration processing unit 102 registers: the company number of the supply destination company received in S604 into the field 20521 of the record in question; the basic process number specified in S605 into the field 20526; the environmental load item corresponding to the record in question into the field 20523; the quantity of the environmental load item corresponding to the record in question, which has been received in S604, into the field 20524; and the input/discharge classification of the environmental load item corresponding to the record in question into the field 20525 (S605).

Hereinabove, the third embodiment of the present invention has been described.

The third embodiment has the following effect in addition to the effects of the second embodiment. That is to say, even if a supplier does not know which basic process his product is tied to, the supplier can register environmental load information of his product into the environmental load management table 2052A as far as the supplier knows which life stage his product (part) is incorporated into.

### [Fourth Embodiment]

In the above-described first embodiment, user's original processes are previously associated one-to-one with basic processes. And, environmental load information of a user's original process, which is received from the user, is managed as environmental load information of a basic process corresponding to the user's original process in question. Environmental load information is received from a user for each basic process. In contrast with this, in a fourth embodiment of the present invention, a user defines a new process that does not belong to no basic process, and environmental load information of the new process can be received by the part environmental load information registration processing described in the third embodiment. Accordingly, an environmental load evaluation support apparatus of the present embodiment differs from the environmental load evaluation support apparatus of the first embodiment in the following points.

### 1. Process Information Registration Processing Unit 103

A process information registration processing unit 103 of the present invention performs the above-described part environmental load information registration processing (S603 - S606 of Fig. 23) in addition to the above-described process information registration processing (See Fig. 13). The part environmental load information registration processing starts its flow when, on a process information reception screen as shown in Fig. 14, a basic process identified as a new process is selected and a process number, a process name and a disclosure level are input, and a new process environmental load item setting button not shown is selected.

The process information registration processing unit 103 generates an environmental load item reception screen having entries 1028 for selecting a company number, an applicable law/regulation and a life stage number and entries 1029 for all the environmental load items that have been set previously, as shown in Fig. 25, and displays the generated screen on the input-output unit 30 (S603). Then, the process information registration processing unit 103 receives a company number, an applicable law/regulation, a life stage number and respective quantities (input quantities/discharge quantities) of the environmental load items concerned from a user through the input-output unit 30 (S604).

Next, the process information registration processing unit 103 searches the stage definition information management table 2072 for a record having the company number and the life stage number received in S701, and specifies the stage definition information registered in the retrieved record. Then, the process information registration processing unit 103 specifies a basic process number that belongs to the uppermost classification described in the specified stage definition information (S605). Then, the process information registration processing unit 103 adds a new record to the environmental load management table 2052A for each environmental load item whose quantity has been received in S702. Then for each of the added records, the process information registration processing unit 103 registers: the company number received in S702 into the field 20521 of the record in question; the basic process number specified in S703 into the field 20526; the environmental load item corresponding to the record in question into the field 20523; the quantity of the environmental load item corresponding to the record in question, which has been received in S702, into the field 20524; and the input/discharge classification of the environmental load item corresponding to the record in question into the field 20525 (S606).

Hereinabove, the fourth embodiment of the present invention has been described.

The fourth embodiment has the following effect in addition to the effects of the first embodiment. That is to say, with respect to a new process that does not belong to any basic process, a supplier can register the environmental load information into the environmental load management table 2052A if it is known which life stage the part concerned is incorporated into.

Hereinabove, the embodiments of the present invention have been described.

The present invention is not limited to the above embodiments, and can be variously modified within the scope of the invention. For example, in the above embodiments, the input-output unit 30 may be connected to a user's terminal through a network. And, various instructions may be received through the user's terminal and various kinds of information may be displayed on the user's terminal. Further, in the above embodiments, it is not necessary that the storage units 201 - 207 are provided in one computer unit. These storage units 201 - 207 may be placed at different locations on a network. Similarly, the component units 101 - 105 of the operation unit 1 may be implemented by a plurality of computer units.

## Claims

1. An environmental load aggregation apparatus for aggregating environmental load information in life stages of a product, said environmental load aggregation apparatus comprising:
a part information storage device which stores part information on various parts or the product, said part information including information on other parts having a parent-child relationship to the various parts;
a process information storage device, which stores process information on a process relating to production of a part or the product, said process information being defined by a supplier of the part or the product and comprising information on environmental load items affecting environment in said process, information on a basic process corresponding to said process among basic processes that are defined by a predetermined rule and that relate to the production of the product, and information on a part to which said process is tied;
a stage definition information storage device, which stores stage definition information on a life stage of the product, the stage definition information being defined by the supplier of the product and comprising information on a basic process assigned to said life stage; and
an environmental load information aggregation device, which receives designation of the product and aggregates environmental load information in life stages of the designated product; wherein
said environmental load information aggregation device performs: processing for specifying each component part of the designated product, using the part information of each part, which is stored in said part information storage device; processing for searching the process information storage device for process information on a process tied to each of the specified parts; processing for classifying retrieved pieces of process information according to a life stage to which a basic process included in each piece of process information is assigned, using the stage definition information of the supplier of the designated product, which is stored in said stage definition information storage device; and processing for aggregating the environmental load information included in the retrieved pieces of process information, for each life stage.

2. An environmental load aggregation apparatus according to Claim 1 further comprising:
a basic process storage device, which stores basic process information on each basic process relating to production of the product; and
a stage definition information registration device, which registers stage definition information in said stage definition information storage device; wherein
said stage definition information registration device performs: processing for outputting basic process information on each basic process stored in said basic process information storage device, and receiving selection of a basic process assigned to a life stage of the product; and processing for registering stage definition information that has information on the basic process assigned to said life stage in said stage definition information storage device.

3. An environmental load aggregation apparatus according to Claim 1 further comprising:
a basic process storage device, which stores basic process information on each basic process relating to production of the product;
an environmental load item storage device, which stores, for each basic process, environmental load items to be considered in each basic process; and
a process information registration device, which registers process information in said process information storage device; wherein
said process information registration device performs: processing for outputting part information of each part stored in said part information storage device, and receiving selection of a part to which a process to be registered is tied; processing for outputting information on each basic process stored in said basic process information storage device, and receiving selection of a basic process that is associated with the process to be registered; processing for outputting environmental load items stored in association with the selected basic process in said environmental load item storage device, and receiving input of information on said environmental load items, said information being set to the process to be registered; and processing for registering process information that includes the selected part, the selected basic process, and the input information on the environmental load items, in said process information storage device.

4. An environmental load aggregation apparatus according to one of Claims 1 - 3 further comprising:
a part configuration information display device, which receives designation of the product, and displays the part information of each component part of the designated product, which is stored in said part information storage device, and the process information of a process tied to any component part of said designated product, which is stored in said process information storage device; wherein
each piece of process information stored in said process information storage device has a disclosure level indicating whether information on environmental load items should be disclosed or not; and
when said part configuration information display device displays the process information of a process tied to a component part of said designated product, the part configuration information display device displays the information on the environmental load items included in said process information, as is, when a disclosure level included in said process information permits disclosure of the information on the environmental load items, and displays a life cycle assessment value calculated from the information on the environmental load items included in said process information, when said disclosure level does not permit disclosure.

5. An environmental load aggregation method, in which a computer aggregates environmental load information in life stages of a product, wherein:
a storage unit of said computer stores: part information, which is information on various parts or the product and includes information on other parts having a parent-child relationship to the various parts; process information, which is information on a process relating to production of a part or the product, said process information being defined by a supplier of the part or the product and comprising information on environmental load items affecting environment in said process, information on a basic process corresponding to said process among basic processes that are defined according to a predetermined rule and relate to the production of the product, and information on a part to which said process is tied; and stage definition information, which is information on a life stage of the product, the stage definition information being defined by the supplier of the product and comprising information on a basic process assigned to said life stage; and
an operation unit of said computer performs:
a step of specifying each component part of a designated product, using the part information of each part, which is stored in said part information storage device;
a step of searching the process information storage device for process information on a process tied to each of the specified parts;
a step of classifying retrieved pieces of process information according to life stage to which a basic process included in each piece of process information is assigned, using the stage definition information of the supplier of the designated product, which is stored in said stage definition information storage device; and
a step of aggregating the environmental load information included in the retrieved pieces of process information, for each life stage.

6. An environmental load aggregation method according to Claim 5, wherein each piece of process information stored in said storage unit has a disclosure level indicating whether information on environmental load items should be disclosed or not;
said operation unit further performing:
a step of receiving designation of the product, and displaying the part information of each component part of the designated product and the process information of a process tied to any component part of said designated part, with said part information and said process information being stored in said storage unit; and
a step of displaying, wherein, when the process information of a process tied to a component part of said designated product is displayed, the information on the environmental load items included in said process information is displayed, as is, when the disclosure level included in said process information permits disclosure of the information on the environmental load items, and a life cycle assessment value calculated from the information on the environmental load items, which is included in said process information, is displayed when said disclosure level does not permit the disclosure.

7. A computer-readable program, wherein a storage unit of a computer stores: part information, which is information on various parts or a product and includes information on other parts having a parent-child relationship to the various parts; process information, which is information on a process relating to production of a part or the product, said process information being defined by a supplier of the part or the product and comprising information on environmental load items affecting environment in said process, information on a basic process corresponding to said process among basic processes that are defined by a predetermined rule and relate to the production of the product, and information on a part to which said process is tied; and stage definition information, which is information on a life stage of the product, the stage definition information being defined by the supplier of the product and comprising information on a basic process assigned to said life stage; wherein
said program realizes, in an operation unit of said computer:
a function of specifying each component part of a designated product, using the part information of each part, which is stored in said part information storage device;
a function of searching the process information storage device for process information on a process tied to each of the specified parts;
a function of classifying retrieved pieces of process information according to a life stage to which a basic process included in each piece of process information is assigned, using the stage definition information of the supplier of the designated product, which is stored in said stage definition information storage device; and
a function of aggregating the environmental load information included in the retrieved pieces of process information, for each life stage.

8. A computer-readable program according to Claim 7, wherein:
each piece of process information stored in said storage unit has a disclosure level indicating whether information on environmental load items should be disclosed or not;
said program further realizes, in said operation unit:
a function of receiving designation of the product, and displaying the part information of each component part of the designated product and the process information of a process tied to any component part of said designated part, with said part information and said process information being stored in said storage unit; and
said function of displaying displays, when the process information of a process tied to a component part of said designated product is displayed, the information on the environmental load items included in said process information, as is, when the disclosure level included in said process information permits disclosure of the information on the environmental load items, and displays a life cycle assessment value calculated from the information on the environmental load items, which is included in said process information, when said disclosure level does not permit the disclosure.

9. An environmental load aggregation apparatus for aggregating environmental load information in life stages of a product, said environmental load aggregation apparatus comprising:
a part information storage device, which stores part information on various parts or the product, said part information including information on other parts having a parent-child relationship to the various parts;
a process information storage device, which stores process information comprising information on a basic process relating to production of the product, which is defined by a predetermined rule, and information on a part to which said process information is tied;
an environmental load information storage device, which stores environmental load information comprising information on a basic process and information environmental load items affecting environment in said basic process;
a life stage definition information storage device, which stores stage definition information comprising information on basic processes assigned to each life stage of the product; and
an environmental load information aggregation device, which receives designation of the product and aggregates environmental load information in life stages of the designated product; wherein
said environmental load information aggregation device performs: processing for specifying each component part of the designated product, using the part information of each part, which is stored in said part information storage device; processing for searching the process information storage device for process information on a process tied to each of the specified parts; processing for classifying retrieved pieces of process information according to a life stage to which a basic process included in each piece of process information is assigned, using the stage definition information of the designated product, which is stored in said stage definition information storage device; and processing for reading environmental load information including information on a basic process included in each of the retrieved pieces of process information, from said environmental load information storage device, and aggregating the environmental load information included in the read pieces of process information, for each life stage.

10. An environmental load aggregation apparatus according to Claim 9, further comprising:
an environmental load information registration device, which performs: processing for receiving information on environmental load items together with designation of a life stage; and processing for specifying basic processes constituting the designated life stage and for registering environmental load information that includes the specified basic processes and the received information on the environmental load items to said environmental load information storage device.

11. An environmental load aggregation method, in which a computer aggregates environmental load information in life stage of a product, wherein:
a storage unit of said computer stores: part information, which is information on various parts or the product and includes information on other parts having a parent-child relationship to the various parts;
process information, which comprises information on a basic process relating to production of the product, said basic process being defined according to a predetermined rule, and information on a part tied to said basic process; environmental load information comprising information on a basic process and information on environmental load items affecting environment in said basic process; and stage definition information comprising information on a basic process assigned to each life stage of the product; and
an operation unit of said computer performs:
a step of receiving designation of the product through an input unit;
a step of specifying parts constituting the designated product, using the part information of each part, which is stored in said storage unit;
a step of searching said storage unit for each piece of process information tied to each of said specified parts;
a step of classifying the retrieved pieces of process information according to a life stage to which a basic process included in each piece of process information is assigned, using the stage definition information of said designated product, which is stored in said storage unit; and
a step of reading environmental load information including information on a basic process included in each retrieved piece of process information, and aggregating information on environmental load items included in the read pieces of environmental load information, for each life stage.

12. A computer readable program, wherein:
a storage unit of a computer stores: part information, which is information on various parts or a product and includes information on other parts having a parent-child relationship to the various parts; process information comprising information on a basic process that is defined according to a predetermined rule and relates to production of the product, and information on a part tied to said basic process; environmental load information, which comprises information on a basic process and information on environmental load items affecting environment in said basic process; and stage definition information, which comprises information on basic processes assigned to each life stage of the product; and
said program realizes, in an operation unit of said computer:
a function of receiving designation of the product through an input unit;
a function of specifying parts constituting the designated product, using the part information of each part, which is stored in said storage unit;
a function of searching said storage unit for each piece of process information tied to each of said specified parts;
a function of classifying the retrieved pieces of process information according to a life stage to which a basic process included in each piece of process information is assigned, using the stage definition information of said designated product, which is stored in said storage unit; and
a function of reading environmental load information including information on a basic process included in each retrieved piece of process information, and aggregating information on environmental load items included in the read pieces of environmental load information, for each life stage.
